(19)

**Europäisches Patentamt**
**European Patent Office**
**Office européen des brevets**

(11) **EP 3 890 261 A1**

(12) **EUROPEAN PATENT APPLICATION**
published in accordance with Art. 153(4) EPC

(43) Date of publication:
06.10.2021 Bulletin 2021/40

(21) Application number: 19902151.0

(22) Date of filing: 24.12.2019

(51) Int Cl.:
H04L 29/06 (2006.01)    H04W 40/02 (2009.01)
H04B 17/318 (2015.01)    H04W 40/12 (2009.01)
H04W 76/10 (2018.01)

(86) International application number:
PCT/CN2019/128100

(87) International publication number:
WO 2020/135457 (02.07.2020 Gazette 2020/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.12.2018  CN 201811595825

(71) Applicant: Huawei Technologies Co., Ltd.
Shenzhen Guangdong 518129 (CN)

(72) Inventors:
• KANG, Jiao
  Shenzhen, Guangdong 518129 (CN)
• WANG, Fanzhao
  Shenzhen, Guangdong 518129 (CN)
• WANG, Hao
  Shenzhen, Guangdong 518129 (CN)
• LI, Tong
  Shenzhen, Guangdong 518129 (CN)
• YU, Libo
  Shenzhen, Guangdong 518129 (CN)
• ZHENG, Kai
  Shenzhen, Guangdong 518129 (CN)

(74) Representative: Pfenning, Meinig & Partner mbB
Patent- und Rechtsanwälte
Theresienhöhe 11a
80339 München (DE)

(54) **CONNECTION ESTABLISHMENT METHOD AND RELATED DEVICE**

(57)     This application discloses a connection establishment method and a related device. The method is used for an end node of the connection. The method includes: obtaining respective transmission status information of at least two available paths, where transmission status information of each of the at least two available paths indicates transmission performance of the available path, and the at least two available paths respectively correspond to different types of networks; determining an available path with better transmission performance in the at least two available paths based on the transmission status information of the at least two available paths; and establishing the connection by using a network corresponding to the available path with better transmission performance. In the embodiments of this application, the end node determines the path with better transmission performance from the plurality of available paths based on the transmission status information of the available paths, to further establish the connection to another end node. In this way, the path with better transmission performance can be accurately determined. Implementation is simple.

```
          601
  Generate a link establishment request

          602
  Obtain throughputs of M available paths

          603
  Select a target available path

          604
  Establish an MPTCP connection by using the target
  available path as a primary path
```

FIG. 6

EP 3 890 261 A1

**Description**

**TECHNICAL FIELD**

This application relates to the field of communications technologies, and in particular, to a connection establishment method and a related device.

**BACKGROUND**

A transport layer (transport layer) is the fourth layer of an open systems interconnection (Open System Interconnection, OSI) model developed by the International Organization for Standardization (International Organization for Standardization, ISO). A protocol of this layer provides an end-to-end communication service for an application process. The transport layer is the first end-to-end layer in data communication between two computers through a network. Conventional transport layer protocols support only a single-path function, that is, one transport layer connection can be bound to only one end-to-end path for data transmission. Transmission control protocol (Transmission Control Protocol, TCP) is a connection-oriented, reliable, byte stream-based transport layer communication protocol, and performs a function specified for the transport layer in OSI.

With the rise of Internet Protocol version 6 (IPv6), multi-homed hosts (multi-home host) become increasingly popular. Even for Internet Protocol version 4 (IPv4) that is widely used at present, multi-homed hosts are also increasing in use. Multi-homed hosts include a server in a data center fat-tree (Fat-tree) network architecture, and a smartphone with a variety of connections such as 4G, Wi-Fi, 3G, and Bluetooth connections. In order to make full use of a multi-connectivity feature of a device, using a multipath transport layer protocol has become a current trend. MPTCP (Multipath TCP) is a multipath TCP protocol developed by the Internet Engineering Task Force's (IETF) Multipath TCP working group, and aims at allowing a TCP connection to use a plurality of paths to maximize channel resource usage. MPTCP is backward compatible with the conventional TCP protocols. MPTCP is a transport layer protocol in which a plurality of paths are used for concurrent transmission. According to MPTCP, a plurality of connections are initialized in sequence. To be specific, after one channel is established in a three-way handshake manner, another sub-channel is established in a four-way handshake (MPTCP JOIN) manner. These channels are all bound to an MPTCP session (session). One of the channels may be selected for transmitting data from a transmit end, or data from a transmit end may be transmitted on a plurality of channels by using a scheduler.

In the foregoing solution, a device configures, in a default manner, an initial path for link establishment of the device. For example, a mobile phone uses a Wi-Fi path as the initial path by default. A disadvantage of this solution is that a subsequent sub-connection cannot be established if a default initial connection cannot be established. In addition, when performance of a default initial path is poor, overall performance of link establishment is affected. Therefore, study needs to be made to find a method for establishing a transport layer connection with better performance.

**SUMMARY**

A first aspect of embodiments of this application provides a connection establishment method and a related device, to increase a connection establishment success rate and ensure transmission performance of an established connection.

A first aspect of the embodiments of this application provides a connection establishment method. The method is used for an end node of the connection, and includes: obtaining respective transmission status information of at least two available paths, where transmission status information of each of the at least two available paths indicates transmission performance of the available path, and the at least two available paths respectively correspond to different types of networks; determining an available path with better transmission performance in the at least two available paths based on the transmission status information of the at least two available paths; and establishing the connection by using a network corresponding to the available path with better transmission performance.

The end node may be a terminal, for example, a mobile phone, a notebook computer, a tablet computer, a wearable device, or a personal digital assistant, or may be a server. The available paths correspond to the networks, and the networks correspond to network interfaces (network interface). Therefore, it may be understood that the available paths correspond to the network interfaces, that is, different available paths correspond to different network interfaces. Optionally, each available path corresponds to one network interface. The transmission status information of the available paths is transmission status information of the network interfaces. Because the network interfaces correspond to the networks, selecting a network interface is selecting a network. For example, an LIE interface corresponds to an LTE network, and a Wi-Fi interface corresponds to a Wi-Fi network. The connection (connection) is used for data transmission between a transmit end (sender) and a receive end (receiver). The transmission refers to bidirectional information exchange, that is, includes both sending and receiving. In this embodiment of this application, one end node corresponds to the transmit end, and another end node corresponds to the receive end. One connection may correspond to a plurality of paths (path) in a network topology, and packets of a plurality of flows (flow) may be transmitted on one connection. A path is a link (link) between the transmit end (sender) and the receive end (receiver). A path may be identified by using a four-tuple or a five-tuple. For example, the five-tuple includes a source IP address, a source port number, a destination IP address, a destination port number, and a transport layer protocol name. In this application, an available path (Available path) may be understood as a network interface, or may be understood as a link (link).

In this embodiment of this application, the end node determines the path with better transmission performance from the plurality of available paths based on the transmission status information of the available paths, to further establish the connection to another end node. In this way, the path with better transmission performance can be accurately determined. Implementation is simple.

In an optional implementation, the transmission status information of each of the at least two available paths includes at least one of the following parameters: signal strength, a throughput, a round-trip time, and a link establishment success rate.

The transmission status information of each of the at least two available paths may further include a packet loss rate, a queuing delay, a congestion window value, and another parameter used to represent transmission performance of the available path. The transmission status information of each of the at least two available paths may include a same type of parameter. A manner in which the end node determines the transmission performance of each available path may be the same or be different.

In an optional implementation, the connection is a multipath connection, and the establishing the connection by using a network corresponding to the available path with better transmission performance includes: communicating with the another end node of the connection by using the network corresponding to the available path with better transmission performance, to establish an initial path of the multipath connection.

An initial path (initial path) is a path of an initial connection, for example, a subflow first established in a multipath connection. A subflow (subflow) is a TCP-segment (segment) flow running on a single path (path), and is also a part of an MP (multiple path) connection. An MP connection is a group of subflows that can be used for communication between two end nodes over (over) an application, where the group of subflows includes a plurality of subflows. There is a one-to-one mapping relationship between a connection and an application interface (socket). An MP connection is a connection that uses a plurality of paths to transmit data, and each path (that is, subflow) may use different transmission protocols. For example, if the path uses a TCP protocol, the MP connection is an MPTCP connection. Starting (start) and termination (termination) of a subflow are similar to those of a regular (regular) TCP connection. In this specification, one subflow corresponds to one path. The multipath connection may be an MPTCP connection.

In this implementation, the available path with better transmission performance is selected based on the transmission status information of the at least two available paths, to further establish the initial path of the multipath connection. This can increase a connection establishment success rate.

In an optional implementation, the obtaining respective transmission status information of at least two available paths is triggered by a request delivered by an application in the end node.

Optionally, after receiving the request delivered by the application, the end node obtains the respective transmission status information of the at least two available paths, to select the available path with better transmission performance from the at least two available paths. It may be understood that the end node obtains the transmission status information of each available path after receiving the request delivered by the application, rather than obtaining the transmission status information of each available path in real time or periodically. In this way, a workload of the end node can be effectively reduced, and latest transmission status information can be obtained in a timely manner.

In an optional implementation, the transmission status information of the at least two available paths is signal strength of each of the at least two available paths, and the obtaining transmission status information of at least two available paths includes: detecting respective signal strength of the at least two available paths.

Optionally, the end node obtains a received signal strength indicator (Received Signal Strength Indicator, RSSI) of a network interface corresponding to each of the at least two available paths, determines signal strength of each network interface based on an RSSI of the network interface, and uses the signal strength of each network interface as signal strength of an available path corresponding to the network interface.

In this implementation, an available path with higher signal strength can be accurately and quickly determined from the plurality of available paths, to further establish the connection.

In an optional implementation, the transmission status information of the at least two available paths is a round-trip time of each of the at least two available paths, and the obtaining transmission status information of at least two available paths includes: receiving a plurality of round-trip time from at least one server, where each of the plurality of round-trip time corresponds to a path that has connected the at least one server to the end node or a path that is connecting the at least one server to the end node, and network types corresponding to the plurality of round-trip time include the types of the networks respectively corresponding to the at least two available paths; and obtaining round-trip time of the at least two available paths based on the plurality of round-trip time.

A round-trip timetime (Round-trip Time, RTT) indicates a time that elapses in a process from sending data by the transmit end (the end node) to receiving, by the transmit end, a reception acknowledgment message (for example, an ACK message) that corresponds to the data and that is sent by the receive end (the another end node). It should be understood that, in an implementation, after receiving the data, the receive end immediately sends the acknowledgment message corresponding to the data, where "immediately" should be understood as including a necessary processing time from reception of the data to sending the acknowledgment message by the receive end. It should be understood that "round-trip time" may be abbreviated to either RTT or rtt. For example, in some code, rtt is used for representation. The end node determines the round-trip time of each available path in a same manner. The end node may determine that a round-trip time of an available path is an average latency of at least one subflow corresponding to the available path. Alternatively, a round-trip time of an available path may be a maximum latency corresponding to at least one subflow corresponding to the available path. Alternatively, a round-trip time of an available path may be a minimum latency corresponding to at least one subflow corresponding to the available path. Alternatively, a round-trip time of an available path may be a latency, of a subflow corresponding to the available path, last received by the end node.

In this implementation, the end node can accurately and quickly determine the round-trip time of each available path, to further determine an available path with a lower round-trip time from the plurality of available paths.

In an optional implementation, a round-trip time of any one of the at least two available paths is carried in an option field in a header of a packet sent by the another end node.

An option field in a header of a packet is an extensible field. In this implementation, a round-trip time of a subflow is carried by using an option field, so that an extensible field of a packet can be effectively used. Implementation is simple, and compatibility is strong. Optionally, a header of a packet includes an option field (that is, Option field), and the option field may include a kind (Kind) field, a length (Length) field, and a subtype (Subtype) field. The kind field indicates a type of the packet. For example, when Kind=30, the kind field indicates that the packet is an MPTCP message. The subtype field is used to indicate a capability, of a sending party, of supporting "sending/receiving a subflow round-trip time". The option field may further carry a round-trip time field, that is, a latest RTT or an RTT calculated by the another end node by using an algorithm. This is not limited in this application. A subflow round-trip time is a round-trip time of a subflow. The sending party is a party that sends the packet. For example, if the packet is sent by the end node during link establishment, the subtype field indicates only the capability, of the sending party, of supporting "sending/receiving a subflow round-trip time", and the round-trip time field has no data. For example, if the packet is sent by the end node in a data transmission phase (that is, link establishment has been completed), the subtype field indicates the capability of supporting "sending/receiving a subflow round-trip time", and the round-trip time field carries a round-trip time of a subflow, that is, a round-trip time of one subflow between the end node that sends the packet and the end node that receives the packet. For example, a field used by two ends during link establishment to indicate a capability of supporting "sending/receiving a subflow round-trip time" is different from a field used during data transmission to indicate that an end node that sends a packet transmits a subflow round-trip time to an end node that receives the packet.

In this embodiment of the present invention, a header of a packet includes an option field (that is, Option field), and the option field may include a kind (Kind) field, a length (Length) field, and a subtype (Subtype) field. The kind field indicates a type of the packet. For example, when Kind=30, the kind field indicates that the packet is an MPTCP message. The subtype field is used to indicate a capability, of a sending party, of supporting "sending a subflow round-trip time by a server". The option field may further carry a round-trip time field, that is, a latest RTT or an RTT calculated by the another end node by using an algorithm. This is not limited in this application. A subflow round-trip time is a round-trip time of a subflow. The sending party is a party that sends the packet. For example, if the packet is sent by the end node during link establishment, the subtype field indicates only the capability, of the sending party, of supporting "sending a subflow round-trip time by the server", and the round-trip time field has no data. For example, if the packet is sent by the end node in a data transmission phase (that is, link establishment has been completed), the subtype field indicates the capability of supporting "sending a subflow round-trip time by the server", and the round-trip time field carries a round-trip time of a subflow, that is, a round-trip time of one subflow between the end node that sends the packet and the end node that receives the packet. For example, a field used by two ends during link establishment to indicate a capability of supporting "sending a subflow round-trip time by a server" is different from a field used during data transmission to indicate that the server transmits a subflow round-trip time to a client.

In an optional implementation, the transmission status information of the at least two available paths is a throughput of each of the at least two available paths, and the obtaining transmission status information of at least two available paths includes:
detecting respective throughputs of the at least two available paths.

The end node may detect the respective throughputs of the at least two available paths in real time or periodically. In actual application, the end node may detect, in real time or periodically, a throughput of a network (network interface) corresponding to each available path, and use the throughput of the network interface corresponding to each available path as the throughput of each available path. In this implementation, the end node can accurately and quickly determine the throughput of each available path, to further determine an available path with a larger throughput from the plurality of available paths.

In an optional implementation, the transmission status information of the at least two available paths is a link establishment success rate of each of the at least two available paths, and the obtaining transmission status information of at least two available paths includes: collecting statistics about the link establishment success rate of each of the at least two available paths.

Link establishment means establishing a connection (link). In this implementation, the end node can accurately and quickly determine the link establishment success rate of each available path, to further determine an available path with a higher link establishment success rate from the plurality of available paths. This can effectively increase a link establishment success rate.

In an optional implementation, before the obtaining respective transmission status information of at least two available paths, the method further includes: determining, based on the request delivered by the application, that the application once established a connection on the end node.

Different applications may have different requirements on transmission performance. For example, an application A has a comparatively demanding requirement on a round-trip time and a comparatively undemanding requirement on a throughput, and an application B has a comparatively demanding requirement on a throughput and a comparatively undemanding requirement on a round-trip time. If the request delivered by the application on the end node triggers a link establishment request for the first time, the end node may lack information used to select, for the application, the available path with better transmission performance.

In this implementation, after determining that it is not the first time the request delivered by the application triggers a link establishment request, the end node obtains the transmission status information of the plurality of available paths, and selects the better available path. This can avoid a problem that an available path with poorer transmission performance is determined due to lack of corresponding information.

In an optional implementation, the method further includes: receiving a request delivered by another application, where the request delivered by the another application triggers a process of establishing another connection by the end node; and if the application has never established a connection on the end node, establishing, based on the request delivered by the another application, the connection by using a network corresponding to a default path, where the default path is any one of the at least two available paths.

In this implementation, if the request delivered by the application triggers a link establishment request for the first time, the connection is established by using the network corresponding to the default path. This can avoid a problem that an available path with poorer transmission performance is determined due to lack of corresponding information.

In an optional implementation, the determining an available path with better transmission performance in the at least two available paths based on the transmission status information of the at least two available paths includes: if the connection fails to be established by using a network corresponding to a reference available path, determining the available path with better transmission performance in the at least two available paths based on transmission status information of an available path other than the reference available path in the at least two available paths, where the reference available path is any one of the at least two available paths.

In this implementation, after the connection fails to be established by using an available path, the available path with better transmission performance is determined from the plurality of paths except the available path. This can increase a link establishment success rate.

In an optional implementation, the determining an available path with better transmission performance in the at least two available paths based on the transmission status information of the at least two available paths includes: if the connection fails to be established by using a network corresponding to a reference available path, determining the available path with better transmission performance in the at least two available paths based on the transmission status information of the at least two available paths in a first path selection manner, where the reference available path is an available path with better transmission performance in the at least two available paths that is determined based on the transmission status information of the at least two available paths in a second path selection manner, and the first path selection manner is different from the second path selection manner.

In this implementation, the available path with better transmission performance is determined from the plurality of available paths with reference to a plurality of path selection manners. This can increase a link establishment success rate. Implementation is simple.

In an optional implementation, the method further includes: receiving a path setting instruction; and setting, according to the path setting instruction, a manner in which the end node determines the available path with better transmission performance in the at least two available paths based on the transmission status information of the at least two available paths.

In this implementation, a user can set a path selection manner based on a requirement of the user, so as to meet requirements of different application scenarios. This improves user experience.

In an optional implementation, the end node stores a candidate path table, and the candidate path table includes correspondences between the at least two available paths and the transmission status information of the at least two available paths.

In this implementation, the transmission status information of each available path can be quickly obtained.

A second aspect of the embodiments of this application provides a method for establishing a multipath connection. The method is used for an end node of the multipath connection. The method includes: obtaining transmission status information respectively corresponding to at least two network interfaces on the end node, where transmission status information of each of the at least two network interfaces indicates transmission performance of a network corresponding to the network interface, and the at least two network interfaces respectively correspond to different types of networks; configuring, for an initial path of the multipath connection based on the transmission status information respectively corresponding to the at least two network interfaces, a network with better transmission performance in the networks respectively corresponding to the at least two network interfaces, where the initial path corresponds to an initial subflow of the multipath connection; and establishing the initial path by using the network with better transmission performance.

In an optional implementation, the transmission status information of each of the at least two network interfaces is represented by using at least one of the following parameters: signal strength, a throughput, a round-trip time, and a link establishment success rate.

In an optional implementation, the obtaining transmission status information respectively corresponding to at least two network interfaces on the end node is triggered by a request delivered by an application in the end node.

In an optional implementation, the transmission status information respectively corresponding to the at least two network interfaces is round-trip time respectively corresponding to the at least two network interfaces, and the obtaining transmission status information respectively corresponding to at least two network interfaces on the end node includes: receiving round-trip time of a plurality of paths from at least one server, where one end of the plurality of paths is the end node, and types of networks corresponding to the plurality of paths include types of networks respectively corresponding to the at least two available paths; and

obtaining round-trip time of the at least two available paths based on the plurality of round-trip time.

In an optional implementation, the application once established a connection on the end node.

A third aspect of the embodiments of this application provides a communication method. The method is used for an end node of a connection. The method includes: sending, by the end node to another end node of the connection, a round-trip time of a path of the connection. The round-trip time is used to indicate transmission performance of the another end node in a network corresponding to the path.

In this embodiment of this application, the end node sends the round-trip time to the another end node connected to the end node, so that the another end node determines the round-trip time of the path of the connection. Implementation is simple.

In an optional implementation, the round-trip time is carried in an option field in a header of a packet.

A fourth aspect of the embodiments of this application provides an end node, including:

an information obtaining unit, configured to obtain respective transmission status information of at least two available paths, where transmission status information of each of the at least two available paths indicates transmission performance of the available path, and the at least two available paths respectively correspond to different types of networks;

a path selection unit, configured to determine an available path with better transmission performance in the at least two available paths based on the transmission status information of the at least two available paths; and

a connection establishment unit, configured to establish the connection by using a network corresponding to the available path with better transmission performance.

In an optional implementation, the transmission status information of each of the at least two available paths includes at least one of the following parameters: signal strength, a throughput, a round-trip time, and a link establishment success rate.

In an optional implementation, the connection is a multipath connection, and the connection establishment unit is specifically configured to communicate with another end node of the connection by using the network corresponding to the available path with better transmission performance, to establish an initial path of the multipath connection.

In an optional implementation, the obtaining respective transmission status information of at least two available paths is triggered by a request delivered by an application in the end node.

In an optional implementation, the transmission status information of the at least two available paths is signal strength of each of the at least two available paths, and the information obtaining unit is specifically configured to detect respective signal strength of the at least two available paths.

In an optional implementation, the transmission status information of the at least two available paths is a round-trip time of each of the at least two available paths, and the information obtaining unit is specifically configured to: receive a plurality of round-trip time from at least one server, where each of the plurality of round-trip time corresponds to a path that has connected the at least one server to the end node or a path that is connecting the at least one server to the end node, and network types corresponding to the plurality of round-trip time include the types of the networks respectively corresponding to the at least two available paths; and obtain round-trip time of the at least two available paths based on the plurality of round-trip time.

In an optional implementation, a round-trip time of any one of the at least two available paths is carried in an option field in a header of a packet sent by the another end node.

In an optional implementation, the transmission status information of the at least two available paths is a throughput of each of the at least two available paths, and the information obtaining unit is specifically configured to detect respective throughputs of the at least two available paths.

In an optional implementation, the transmission status information of the at least two available paths is a link establishment success rate of each of the at least two available paths, and the information obtaining unit is specifically configured to collect statistics about the link establishment success rate of each of the at least two available paths.

In an optional implementation, the end node further includes a determining unit, configured to determine, based on the request delivered by the application, that the application once established a connection on the end node.

In an optional implementation, the information obtaining unit is further configured to receive a request delivered by another application, where the request delivered by the another application triggers a process of establishing another connection by the end node; and the connection establishment unit is further configured to: if the application has never established a connection on the end node, establish, based on the request delivered by the another application, the connection by using a network corresponding to a default path, where the default path is any one of the at least two available paths.

In an optional implementation, the path selection unit is specifically configured to: if the connection fails to be established by using a network corresponding to a reference available path, determine the available path with better transmission performance in the at least two available paths based on transmission status information of an available path other than the reference available path in the at least two available paths, where the reference available path is any one of the at least two available paths.

In an optional implementation, the path selection unit is specifically configured to: if the connection fails to be established by using a network corresponding to a reference available path, determine the available path with better transmission performance in the at least two available paths based on the transmission status information of the at least two available paths in a first path selection manner, where the reference available path is an available path with better transmission performance in the at least two available paths that is determined based on the transmission status information of the at least two available paths in a second path selection manner, and the first path selection manner is different from the second path selection manner.

In an optional implementation, the end node further includes: a receiving unit, configured to receive a path setting instruction; and

a path setting unit, configured to set, according to the path setting instruction, a manner in which the end node determines the available path with better transmission performance in the at least two available paths based on the transmission status information of the at least two available paths.

A fifth aspect of the embodiments of this application provides another end node. The end node is an end node of a multipath connection. The end node includes: an information obtaining unit, configured to obtain transmission status information respectively corresponding to at least two network interfaces on the end node, where transmission status information of each of the at least two network interfaces indicates transmission performance of a network corresponding to the network interface, and the at least two network interfaces respectively correspond to different types of networks;

a network configuration unit, configured to configure, for an initial path of the multipath connection based on the transmission status information respectively corresponding to the at least two network interfaces, a network with better transmission performance in the networks respectively corresponding to the at least two network interfaces, where the initial path corresponds to an initial subflow of the multipath connection; and

a connection establishment unit, configured to establish the initial path by using the network with better transmission performance.

In an optional implementation, the transmission status information of each of the at least two network interfaces is represented by using at least one of the following parameters: signal strength, a throughput, a round-trip time, and a link establishment success rate.

In an optional implementation, the transmission status information respectively corresponding to the at least two network interfaces is round-trip time respectively corresponding to the at least two network interfaces, and the information obtaining unit is specifically configured to: receive round-trip time of a plurality of paths from at least one server, where one end of the plurality of paths is the end node, and types of networks corresponding to the plurality of paths include types of networks respectively corresponding to the at least two available paths; and obtain round-trip time of the at least two available paths based on the plurality of round-trip time.

In an optional implementation, the obtaining transmission status information respectively corresponding to at least two network interfaces on the end node is triggered by a request delivered by an application in the end node.

In an optional implementation, the application once established a connection on the end node.

A sixth aspect of the embodiments of this application provides still another end node. The end node is an end node of a connection, and includes a sending unit, configured to send, to another end node of the connection, a round-trip time of a path of the connection. The round-trip time is used to indicate transmission performance of the another end node in a network corresponding to the path.

In an optional implementation, the round-trip time is carried in an option field in a header of a packet.

A seventh aspect of the embodiments of this application provides a computer-readable storage medium. The computer storage medium stores a computer program. The computer program includes program instructions. When the program instructions are executed by a processor, the processor is enabled to perform the method according to any one of the first to the third aspects or the optional implementations.

An eighth aspect of the embodiments of this application provides an end node. The end node includes a processor, a memory, and a communications interface. The memory is configured to store code. The processor may invoke the communications interface to establish a connection to another end node. The processor reads the code stored in the memory, to perform the method according to any one of the first to the third aspects or the optional implementations.

A ninth aspect of the embodiments of this application provides a computer program product. When the computer program product is run on a computer, the computer is enabled to perform some or all of steps of any method provided in the first to the third aspects.

**BRIEF DESCRIPTION OF DRAWINGS**

FIG. 1 is a schematic diagram of a system architecture according to an embodiment of this application;
FIG. 2 is a schematic structural diagram of a path selection module according to an embodiment of this application;
FIG. 3 is a schematic diagram of a TCP connection according to an embodiment of this application;
FIG. 4 is a schematic diagram of an MPTCP connection according to an embodiment of this application;
FIG. 5 is a schematic structural diagram of an information obtaining unit according to an embodiment of this application;
FIG. 6 is a flowchart of a path selection method according to an embodiment of this application;
FIG. 7 is a flowchart of another path selection method according to an embodiment of this application;
FIG. 8 is a schematic flowchart of data transmission of an asymmetric traffic service according to an embodiment of this application;
FIG. 9 is a flowchart of still another path selection method according to an embodiment of this application;
FIG. 10 is a flowchart of another path selection method according to an embodiment of this application;
FIG. 11 is a flowchart of another path selection method according to an embodiment of this application;
FIG. 12 is a flowchart of another path selection method according to an embodiment of this application;
FIG. 13 is a flowchart of another path selection method according to an embodiment of this application;
FIG. 14 is a flowchart of another path selection method according to an embodiment of this application;
FIG. 15A and FIG. 15B are a schematic flowchart of a data transmission method according to an embodiment of this application;
FIG. 16 shows an example of a capability negotiation procedure performed by an application client and an application server;
FIG. 17A is a schematic diagram of an option field of first negotiation information according to an embodiment of this application;
FIG. 17B is a schematic diagram of an option field of second negotiation information according to an embodiment of this application;
FIG. 18 shows an example of another capability negotiation procedure performed by an application client and an application server;
FIG. 19 is a schematic structural diagram of an end node according to an embodiment of this application;
FIG. 20 is a schematic structural diagram of another end node according to an embodiment of this application;
FIG. 21 is a schematic structural diagram of another end node according to an embodiment of this application; and
FIG. 22 is a schematic structural diagram of still another end node according to an embodiment of this application.

**DESCRIPTION OF EMBODIMENTS**

To make the technical solutions in the embodiments of this application more comprehensible, the following completely describes the technical solutions in the embodiments of this application with reference to the accompanying drawings in the embodiments of this application. It is clearly that the described embodiments are merely some rather than all of the embodiments of this application.

In the embodiments of the specification, the claims, and the accompanying drawings of this application, the terms "first", "second", "third", and the like are intended to distinguish between similar objects, but do not necessarily indicate a specific order or sequence. Moreover, the terms "include", "have", and any other variants thereof are intended to cover a non-exclusive inclusion, for example, including a series of steps or units. A method, system, product, or device does not need to be limited to those explicitly listed steps or units, but may include other steps or units that are not explicitly listed or that are inherent to the method, system, product, or device. The term "and/or" is used to indicate selecting one or both of two objects connected by the term. For example, "A and/or B" represents A, B, or A and B. The term "a plurality of" means two or more.

Currently, when a conventional transport layer protocol (such as TCP or MPTCP) is used to establish a transport layer connection, all connection information (a channel, a destination IP address, selection of a primary path in a case of multipath, and the like) is preconfigured by a system of a terminal. The terminal establishes the transport layer connection in a default manner, that is, establishes the transport layer connection by using a default configuration, without considering transmission performance of each path. When selecting a path in a manner preconfigured by the system, the terminal cannot evaluate an actual status of each path in real time, for example, a real-time round-trip time from the terminal to a server and a throughput of each path. As a result, it is likely that the selected path cannot meet a transmission requirement. This application provides a solution for selecting a path with better transmission performance based on transmission status information of a plurality of available paths. Transmission status information of an available path may include at least one of a throughput, a round-trip time, signal strength, a packet loss rate, and the like of the available path. A terminal in this application may be a device that needs to establish a transport layer connection, such as a mobile phone, a tablet computer, a notebook computer, a personal digital assistant, a wearable device, or a personal computer. The following describes in detail a connection establishment method provided in this application and a terminal implementing the method.

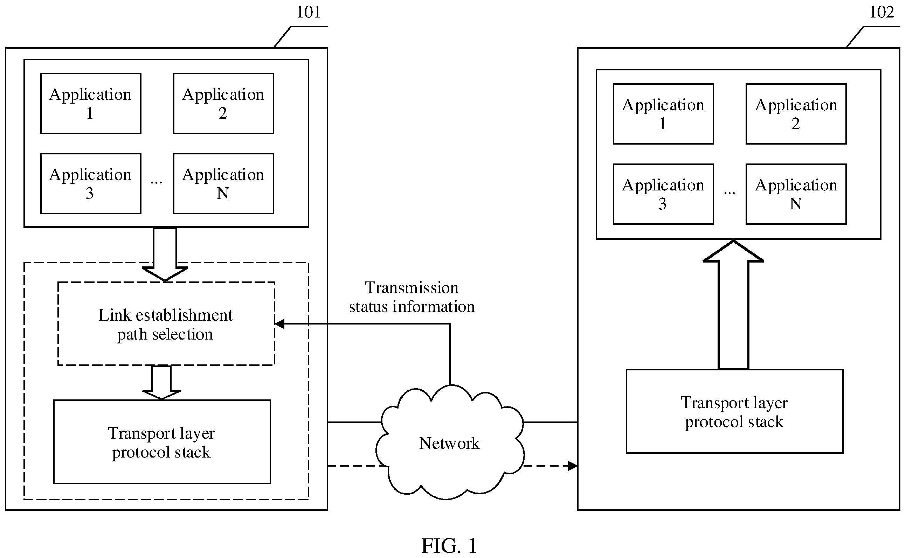

FIG. 1 is a schematic diagram of a system architecture according to an embodiment of this application. As shown in FIG. 1, 101 represents a terminal (an end node), and 102 represents a server (another end node). As shown in FIG. 1, the terminal 101 has a "link establishment path selection" function. To be specific, before establishing a transport layer connection to the server 102 by using a transport layer protocol, the terminal 101 selects a (primary) path with better transmission performance based on transmission status information of a plurality of available paths, to further establish the new transport layer connection. For a single-path protocol such as TCP or user datagram protocol (User Datagram Protocol, UDP), the terminal 101 selects a path to further establish a transport layer connection, for example, a TCP connection. For a multipath protocol such as MPTCP, the terminal 101 selects a primary path. The primary path may also be referred to as an initial path or a primary link. Optionally, an independent function module in the terminal 101 implements the "link establishment path selection" function. Optionally, in the terminal 101, the function module that implements the "link establishment path selection" function is integrated with a function module that implements a transport layer protocol. For example, code run by a central processing unit (Central Processing Unit, CPU) in the terminal 101 may implement the "link establishment path selection" function and a transport layer protocol. A transport layer connection may be established between the terminal 101 and the server 102 in FIG. 1 by using the following operations: (1) The terminal 101 generates a target link establishment request based on an application request initiated by a target application, and sends the target link establishment request to a path selection module. The target application may be any application that runs on the terminal 101. The target link establishment request is used to request the terminal 101 to establish at least one transport layer connection. The path selection module may be an independent function module in the terminal 101, and is configured to implement the "link establishment path selection" function. (2) The path selection module obtains transmission status information of a plurality of available paths. (3) The path selection module selects a target available path with better transmission performance in the plurality of available paths based on the transmission status information of the plurality of available paths, and sends an identifier of the target available path to a transport layer protocol stack. (4) The transport layer connection to the server 102 is established by using the target available path and a transport layer protocol. According to the connection establishment method provided in this application, transmission status information of a plurality of available paths can be obtained in real time or in near real time, and a path with better transmission performance is selected from the plurality of available paths based on the obtained transmission status information. Transmission performance of a path does not greatly change in a short time. Therefore, transmission performance of a path in a future period of time may be predicted based on transmission performance of the path in a recent period of time. In this application, an available path corresponds to a network interface, for example, an LTE interface or a Wi-Fi interface. For example, two available paths of a terminal respectively correspond to an LTE interface and a Wi-Fi interface. Selecting a path with better transmission performance from the two paths is selecting an interface with better transmission performance in the LTE interface and the Wi-Fi interface, to establish a transport layer connection with better transmission performance.

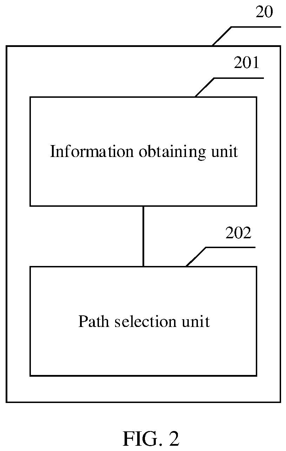

FIG. 1 does not describe in detail how the terminal 101 implements the "link establishment path selection" function. The following describes how to implement the "link establishment path selection" function, with reference to a component that implements the link establishment path selection function in the terminal 101. FIG. 2 is a schematic structural diagram of a path selection module according to an embodiment of this application. As shown in FIG. 2, the path selection module 20 includes an information obtaining unit 201 and a path selection unit 202. The information obtaining unit 201 is configured to obtain M groups of transmission status information that are in one-to-one correspondence with M available paths. The path selection unit 202 is configured to determine a target available path with better transmission performance in the M available paths based on the M groups of transmission status information that are in one-to-one correspondence with the M available paths. Any one of the M groups of transmission status information includes at least one parameter used to represent transmission performance of an available path corresponding to the any one group of transmission status information. Transmission status information of any available path includes at least one of the following: signal strength of the any available path, a throughput of the any available path, a round-trip time of the any available path, and a link establishment success rate of the any available path. Transmission status information of any available path may further include another parameter. This is not limited in this application. The following describes a manner in which the information obtaining unit 201 obtains the transmission status information of the available paths.

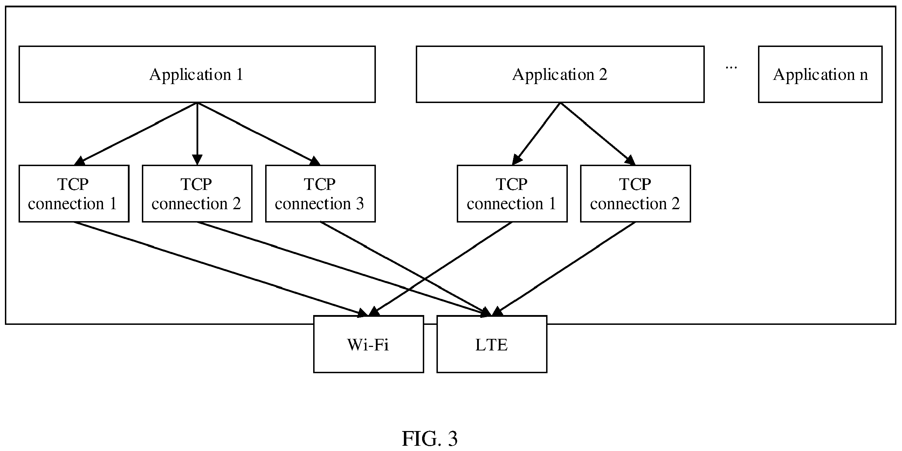

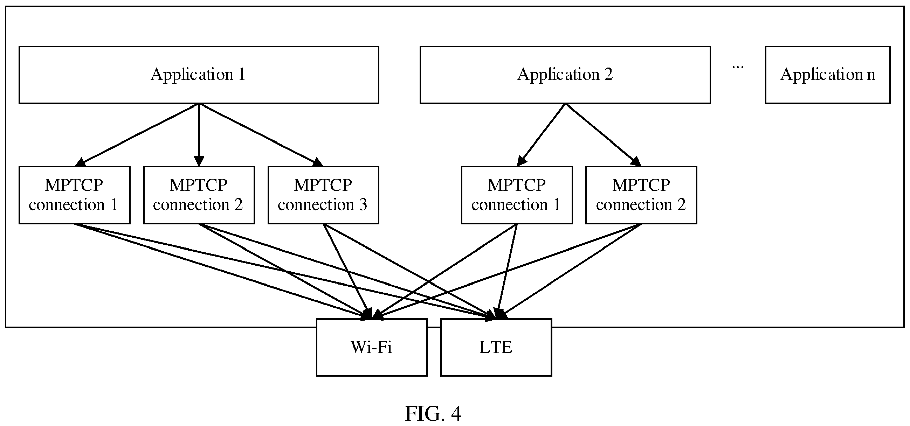

FIG. 3 is a schematic diagram of a TCP connection according to an embodiment of this application. FIG. 3 shows a correspondence between an application, a TCP connection, and a network interface (the figure shows a Wi-Fi and an LTE, and there may be another interface such as a 5G). The Wi-Fi interface corresponds to one available path, and the LTE interface corresponds to another available path. It may be understood that there may be a plurality of applications simultaneously running on a terminal in FIG. 3. One application may establish a plurality of TCP connections in a running process, and each TCP connection may be set up on a different network interface. FIG. 4 is a schematic diagram of an MPTCP connection according to an embodiment of this application. FIG. 4 shows a correspondence between an application, an MPTCP connection, and a network interface (the figure shows a Wi-Fi interface and an LTE interface, and there may be another interface such as a 4G interface or 5G interface). The Wi-Fi interface corresponds to one available path, and the LTE interface corresponds to one available path. As shown in FIG. 4, there may be a plurality of applications simultaneously running on a terminal. One application may establish a plurality of MPTCP connections in a running process, each MPTCP connection may have at least two subflows, and each subflow is set up on a different network interface. Each subflow is a transport layer connection. The connection in each of FIG. 3 and FIG. 4 may be understood as a transport layer connection (transport layer connection) that already exists when the terminal receives a new link establishment request. The terminal may determine a transmission status of each available path based on a transmission status of the transport layer connection that already exists when the link establishment request is received. For example, the terminal may detect a round-trip timetime (Round Trip Time, RTT), a network interface throughput, and the like of each transport layer connection. Table 1 shows each piece of information that can be obtained by the terminal (for example, a mobile phone) and a manner of obtaining each piece of information. It should be understood that an Android mobile phone is merely used as an example herein, and this should not be understood as that the terminal can only be an Android mobile phone.

**Table 1**

| Type | Element | Obtaining manner |
|---|---|---|
| Transmission status information | Signal strength | Obtained by an Android application programming interface (Application Programming Interface, API) |
| | RTT | 1. An RTT is obtained by calculating a time difference between sending a packet and obtaining an acknowledgment message (ACK message).<br>2. For an asymmetric service such as a download service, a data sending party (server) calculates an RTT, adds a latest path RTT to an option field in a transport layer protocol (TCP Option), and transfers |

(continued)

| Type | Element | Obtaining manner |
|------|---------|------------------|
| | | the latest path RTT to a data receiving party (terminal). |
| | Link establishment success rate | Statistics are collected by the terminal, and a statistics collecting manner may be: <br> 1. quantities of times of failed link establishment and successful link establishment within a valid time window; or <br> 2. a quantity of times of failed link establishment at a location. |
| | Throughput | 1. The Android API may obtain throughputs of a single TCP connection and a single MPTCP subflow of an application. <br> 2. A network interface throughput is monitored. |
| Application information | Application name | May be obtained by the Android API |
| | Port number | May be obtained by the Android API |
| | Domain name | May be obtained by the Android API |
| | Transmission requirement of a single application | Obtained through an open interface of the application |
| Location information | GPS and a cell ID | May be obtained by the Android API |
| Network status | Path scheduling policy and a congestion status | Obtained by using a third-party tool or through an open interface of a network element in a network |

The terminal may select a target available path with better transmission performance from a plurality of available paths based on some or all of the information in Table 1, to further establish a new transport layer connection.

The foregoing describes a manner of obtaining transmission status information of an available path. The following describes a manner of selecting a target available path with better transmission performance from a plurality of available paths.

Transmission status information of any one of M available paths of a terminal includes at least one of the following: signal strength of the any available path, a throughput of the any available path, a round-trip time of the any available path, and a link establishment success rate of the any available path. Any one of the M available paths corresponds to one group of transmission status information. The terminal determines transmission performance of each available path in a same manner. The terminal may select, in the following manner, a target available path with better transmission performance from a plurality of candidate connections, to further establish an initial transport layer connection.

Manner 1: The terminal selects the target available path with better transmission performance based on signal strength of the available paths.

The signal strength of the any available path may be signal strength, of a network interface corresponding to the any available path, last detected by the terminal 101. The terminal 101 detects, periodically or in real time, the signal strength of the network interface corresponding to the any available path. Transmission performance of the any available path is positively correlated with the signal strength of the any available path. In actual application, the terminal 101 may monitor, in real time or periodically, signal strength of a network interface corresponding to each available path, and use last monitored signal strength of each network interface as signal strength of an available path corresponding to the network interface. For example, if signal strength, of a Wi-Fi interface, detected by the terminal is greater than signal strength of an LTE interface, the terminal establishes a transport layer connection through the Wi-Fi interface, that is, establishes a new transport layer connection by using Wi-Fi. An indication of the signal strength may be a received signal strength indicator (Received Signal Strength Indicator, RSSI) of the network interface.

Manner 2: The terminal selects the target available path with better transmission performance based on throughputs of the available paths.

The throughput of the any available path may be a maximum throughput, of a network interface corresponding to the any available path, monitored by the terminal 101 within first duration before receiving a link establishment request. Transmission performance of the any available path is positively correlated with the maximum throughput. The first duration may be 100 milliseconds, 1 second, 3 seconds, 10 seconds, or the like. In actual application, the terminal 101 may monitor, in real time or in near real time, a throughput of a network interface corresponding to each available path; and use a maximum throughput that is of each network interface and that is within the first duration before the link establishment request (target link establishment request) is received, as a throughput of an available path corresponding to the network interface. For example, the terminal 101 monitors throughputs of an LTE interface and a Wi-Fi interface. If a maximum throughput, of the LTE interface, within 3 seconds before the link establishment request is received is greater than a maximum throughput, of the Wi-Fi interface, within 3 seconds before the link establishment request is received, the terminal 101 establishes a transport layer connection through the LTE interface. Otherwise, the terminal 101 establishes a transport layer connection through the Wi-Fi interface.

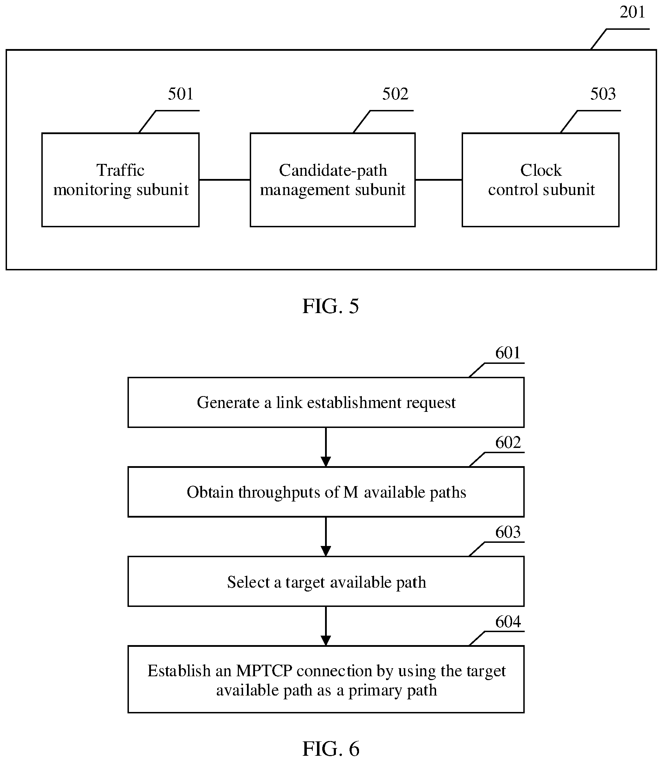

An information obtaining unit 201 in the terminal may be understood as a bandwidth detector running in a system background of the terminal. As shown in FIG. 5, the information obtaining unit 201 includes a traffic monitoring subunit 501, an available-path management subunit 502, and a clock control subunit 503. The traffic monitoring subunit 501 is configured to monitor, in real time or periodically, throughputs of M network interfaces corresponding to the M available paths, and collect statistics about historical maximum throughputs, of the M available paths, within a valid time window. The valid time window is managed by the clock control subunit 503. The valid time window corresponds to the first duration before the terminal receives the link establishment request. If a historical maximum throughput, of an available path, about which statistics are collected by the traffic monitoring subunit 501 is not within the valid time window, the maximum throughput is invalid. For example, there are an application A and an application B on the terminal. If maximum throughputs of the two applications on an LTE path and a Wi-Fi path within the valid time window (for example, 10 minutes, based on a fact that a moving behavior of a user has a specific degree of certainty, for example, at home and in a company) are respectively 5 Mbps and 7 Mbps, a result fed back by the traffic monitoring subunit 501 to the information obtaining unit 201 (bandwidth detector) is that a throughput of the Wi-Fi path is greater than a throughput of the LTE path. The available-path management subunit 502 is configured to add, to an available-path table, a path for which a valid throughput record is monitored by the traffic monitoring subunit 501 within the valid time window, and delete, from the available-path table, a path for which no valid throughput record is monitored by the traffic monitoring subunit 501 within the valid time window. In other words, within the valid time window, if the traffic monitoring subunit 501 obtains a valid throughput record on a path, the available-path management module adds the path to the available-path table; if the traffic monitoring subunit 501 obtains no valid throughput record on a path, the available-path management module deletes the path from the available-path table. A path selection module may select an available path with a largest throughput based on a maximum throughput that is of each available path in the available-path table and that is within the valid time window. If a quantity of available paths in the available-path table is less than 2, the path with better transmission performance is selected from the plurality of available paths in another manner.

FIG. 6 is a flowchart of a path selection method according to an embodiment of this application. As shown in FIG. 6, the method includes the following steps.

601: A terminal generates a link establishment request based on an application request from an application.

The link establishment request is used to request to establish at least one transport layer connection.

602: The terminal obtains throughputs of M available paths.

The obtaining, by the terminal, throughputs of M available paths may be: monitoring, by an information obtaining unit 201 in the terminal, throughputs of M network interfaces corresponding to the M available paths; and using a maximum throughput that is of each network interface and that is monitored within first duration before the link establishment request is received, as a throughput of an available path corresponding to the network interface. For example, an available path is a Wi-Fi path. In this case, the terminal uses a maximum throughput that is of a Wi-Fi interface and that is within the first duration before the link establishment request is received, as a throughput of the available path.

603: The terminal determines a target available path with better transmission performance in the M available paths based on the throughputs of the M available paths.

The target available path may be an available path with a largest throughput in the M available paths, or may be any available path other than an available path with a smallest throughput in the M available paths. Optionally, a throughput of the target available path is greater than a throughput required by the application request, and in the M available paths, a difference between the throughput of the target available path and the throughput required by the application request is the smallest. It should be understood that the terminal may select an available path based on a throughput of each available path in another manner, to establish a transport layer connection. This is not limited in this application.

604: The terminal establishes an MPTCP connection by using the target available path as a primary path (also referred to as an "initial path").

Step 604 may be replaced by establishing a TCP connection by using the target available path, or may be replaced by establishing a transport layer connection based on another transport layer protocol by using the target available path.

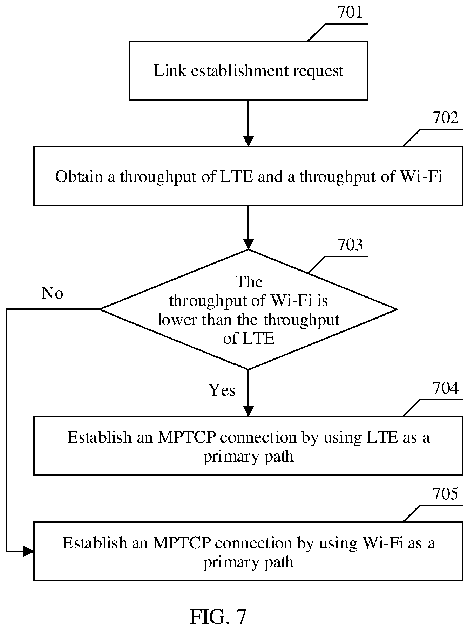

FIG. 7 is a flowchart of another path selection method according to an embodiment of this application. As shown in FIG. 7, the method includes the following steps.

701: A terminal generates a link establishment request based on an application request from an application.

702: The terminal obtains a throughput of LTE and a throughput of Wi-Fi.

It may be understood that LTE is an available path, and Wi-Fi is an available path. The terminal needs to select a path with better transmission performance from the two available paths, to establish an MPTCP connection or a TCP connection.

703: The terminal determines whether the throughput of Wi-Fi is less than the throughput of LTE.

If yes, step 704 is performed. Otherwise, step 705 is performed.

704: The terminal establishes the MPTCP connection by using LTE as a primary path.

705: The terminal establishes the MPTCP connection by using Wi-Fi as a primary path.

It may be understood that a throughput is an important parameter that affects network transmission performance, and a throughput of an available path is positively correlated with transmission performance of the available path. The terminal compares transmission performance of the available paths based on the throughputs of the available paths, thereby accurately and quickly selecting the path with better transmission performance. Implementation is simple.

Manner 3: The terminal selects the target available path with better transmission performance based on round-trip time of the available paths.

The round-trip time of the any available path may be a round-trip time of a reference connection in at least one transport layer connection already established by the terminal 101 by using the any available path. The terminal 101 last receives the round-trip time of the reference connection in the at least one transport layer connection. Transmission performance of the any available path is negatively correlated with the round-trip time of the reference connection. The at least one transport layer connection already established by the terminal 101 by using the any available path may be all transport layer connections established by the terminal 101 by using the any available path when receiving a link establishment request. For example, the terminal 101 establishes 10 transport layer connections (a subflow is also a transport layer connection) through a Wi-Fi interface, and a round-trip time, of one of the 10 transport layer connections, last determined by the terminal 101 is a round-trip time of an available path corresponding to the Wi-Fi interface. The terminal may send a latency notification request to a server, to obtain a round-trip time of N transport layer connections between the terminal and the server. The latency notification request is used to request the server to send, to the terminal, the round-trip time of the N transport layer connections between the terminal and the server, where N is an integer greater than 0. The server may specially send a piece of information for carrying the round-trip time of the transport layer connection, or may add the round-trip time of the transport layer connection to to-be-sent data. After sending the latency notification request to the server, the terminal receives the round-trip time, of the reference connection, sent by the server. The round-trip time of the reference connection may be carried in an option field (option field) in a header of information sent by the server to the terminal. The reference connection is any transport layer connection between the terminal and the server.

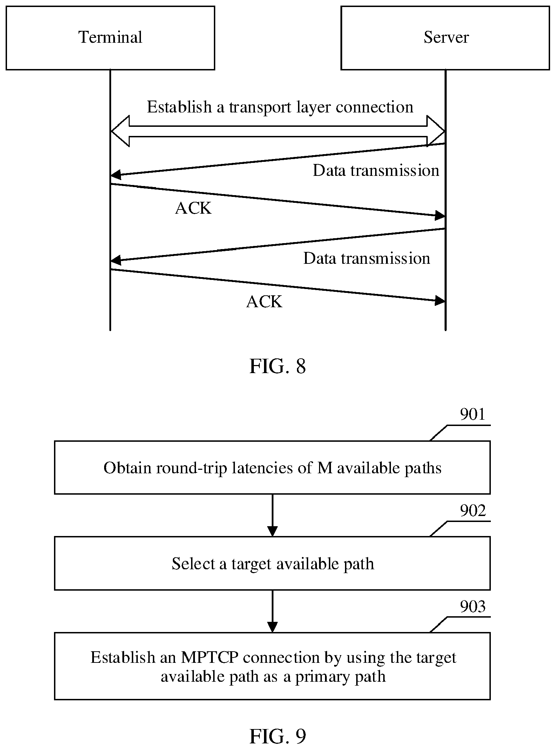

For an asymmetric traffic service such as a download service, the target available path with better transmission performance may be selected based on an RTT of each available path. An RTT of each transport layer connection is calculated by a data sending party (the server), and is transferred to a data receiving party (the terminal) by using an option field (TCP option) in a data header. FIG. 8 is a schematic flowchart of data transmission of an asymmetric traffic service such as HTTP download. To be specific, network traffic is sent mainly by a data sending party (server), and a data receiving party (terminal) sends only an acknowledgment message. An ACK in FIG. 8 is an acknowledgment message. In such an application scenario, the server may calculate a round-trip time of each transport layer connection, and add, to data to be sent to the terminal, the round-trip time obtained through calculation.

FIG. 9 is a flowchart of still another path selection method according to an embodiment of this application. As shown in FIG. 9, the method includes the following steps.

901: A terminal obtains round-trip time of M available paths.

902: The terminal determines a target available path with better transmission performance in the M available paths based on the round-trip time of the M available paths.

The target available path may be an available path with a smallest round-trip time in the M available paths, or may be any available path other than an available path with a largest round-trip time in the M available paths. It should be understood that the terminal may select an available path based on a round-trip time of each available path in another manner, to establish a transport layer connection. This is not limited in this application.

903: The terminal establishes an MPTCP connection by using the target available path as a primary path.

Step 903 may be replaced by establishing a TCP connection by using the target available path, or may be replaced by establishing a transport layer connection based on another transport layer protocol by using the target available path. For example, the terminal establishes a transport layer connection (TCP connection) in a three-way handshake manner.

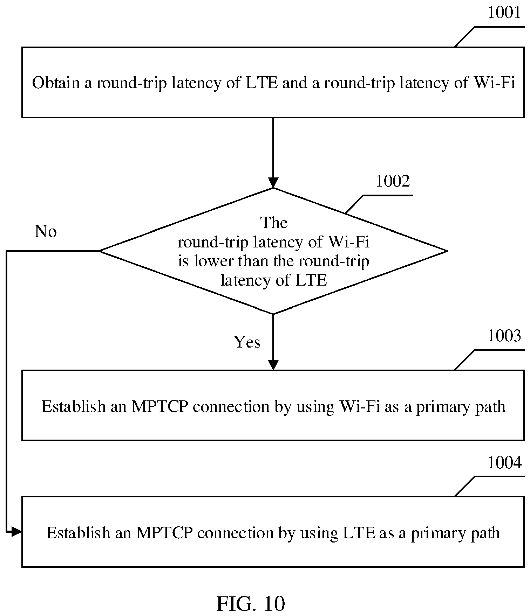

FIG. 10 is a flowchart of another path selection method according to an embodiment of this application. As shown in FIG. 10, the method includes the following steps.

1001: A terminal obtains a round-trip time of LTE and a round-trip time of Wi-Fi.

It may be understood that LTE is an available path, and Wi-Fi is an available path. The terminal needs to select a path with better transmission performance from the two available paths, to establish an MPTCP connection or a TCP connection.

1002: The terminal determines whether the round-trip time of Wi-Fi is lower than the round-trip time of LTE.

If yes, step 1003 is performed. Otherwise, step 1004 is performed.

1003: The terminal establishes the MPTCP connection by using Wi-Fi as a primary path.

1004: The terminal establishes the MPTCP connection by using LTE as a primary path.

It may be understood that a round-trip time is an important parameter that affects network transmission performance, and is particularly important in a data transmission scenario with a comparatively demanding requirement on a latency. Therefore, in some data transmission scenarios, a round-trip time may be used to evaluate transmission performance of each available path. The terminal compares transmission performance of the available paths based on the round-trip time of the available paths, thereby accurately and quickly selecting the path with better transmission performance. Implementation is simple.

Manner 4: The terminal selects the target available path with better transmission performance based on link establishment success rates of the available paths.

The link establishment success rate of the any available path may be a success rate of establishing, by the terminal 101, a transport layer connection by using the any candidate connection within second duration before receiving a link establishment request. Transmission performance of the any available path is positively correlated with the link establishment success rate of the any available path. The link establishment success rate of the any available path may be a ratio of a quantity of times of successful transport layer connection establishment (a quantity of times of successful link establishment) performed by the terminal 101 by using the any candidate connection within the second duration before receiving the link establishment request to a total quantity of times of link establishment (a sum of the quantity of times of successful link establishment and a quantity of times of failed link establishment). The target available path may be an available path with a highest link establishment success rate within the second duration before the link establishment request is received, or may be an available path without any record of failed link establishment within the second duration. It may be understood that a higher link establishment success rate of an available path indicates better transmission performance of the available path. The second duration may be 1 second, 2 seconds, 10 seconds, 30 seconds, or the like. In actual application, the terminal 101 may record a time of establishing a transport layer connection by using each available path and a status of whether the transport layer connection is successfully established. In this manner, a transport layer connection establishment success rate can be effectively increased.

Manner 5: The terminal selects the target available path with better transmission performance based on congestion of the available paths.

Manner 6: The terminal selects the target available path with better transmission performance based on a plurality of transmission parameters of each of the available paths.

The terminal may select the target available path with better transmission performance based on a weighted sum of two or more of transmission parameters such as a throughput, a round-trip time, signal strength, and a link establishment success rate of each available path. For example, a formula used by the terminal to calculate transmission performance of any available path is as follows:

$$S = Th \times A + RTT \times B$$

S represents the transmission performance of the any available path. A larger S obtained through calculation for an available path indicates better transmission performance of the available path. TH is a throughput of the any available path. RTT is a round-trip time of the any available path. Both A and B are system parameters. The terminal may combine a plurality of transmission parameters through weighting calculation of the plurality of transmission parameters or in another manner, to determine superiority or inferiority of transmission performance of each available path, to further select the available path with better transmission performance. Optionally, values of A and B depend on a transmission performance requirement of an application. In other words, for an application with a different transmission performance requirement, transmission performance of an available path is calculated by using a different formula, that is, the values of A and B are different. For example, for an application with a comparatively demanding requirement on a throughput, A is comparatively large and B is comparatively small, so that a throughput is a major factor that affects transmission performance of an available path. For another example, for an application with a comparatively demanding requirement on a round-trip time, A is comparatively small and B is comparatively large, so that a round-trip time is a major factor that affects transmission performance of an available path. In actual application, the terminal may set the values of A and B based on a transmission performance indicator (for example, a throughput or a round-trip time) required by an application, so as to determine an available path that can meet a data transmission requirement of the application, to further establish a connection with better transmission performance.

It should be emphasized that the terminal selects the available path with better transmission performance from the plurality of available paths in the foregoing five manners during initial link establishment, instead of selecting an available path when establishing a subflow based on an existing primary path (primary link).

The foregoing embodiments describe manners of selecting an available path with better transmission performance from a plurality of available paths. The following describes manners of selecting an available path with better transmission performance with reference to a default manner.

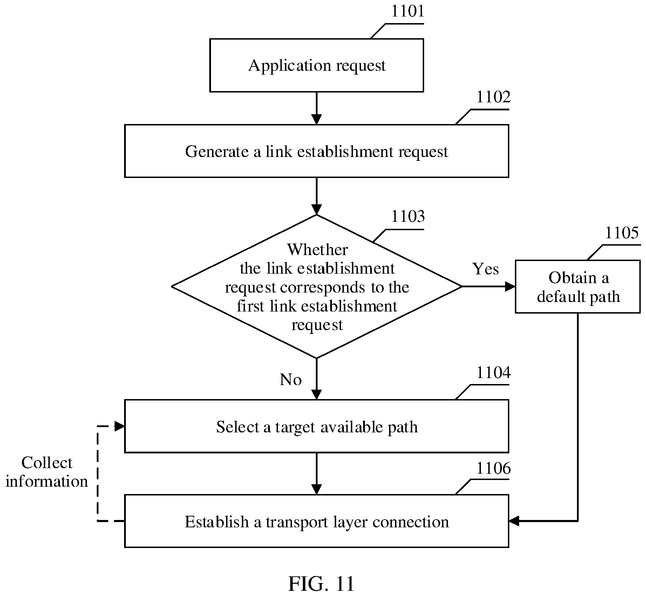

When establishing a transport layer connection for a target application for the first time, a terminal may establish the transport layer connection by using a default path. Subsequently, each time the terminal establishes a transport layer connection for the target application, the terminal selects a target available path with better transmission performance based on transmission status information of a plurality of available paths. FIG. 11 is a flowchart of another path selection method according to an embodiment of this application. As shown in FIG. 11, the method may include the following steps.

1101: A terminal obtains an application request of a target application.

The target application is any application that runs on the terminal.

1102: The terminal generates a target link establishment request based on the application request.

The target link establishment request is used to request to establish at least one transport layer connection.

1103: The terminal determines whether the target link establishment request is the first link establishment request corresponding to the target application.

If yes, step 1105 is performed. Otherwise, step 1104 is performed.

1104: The terminal selects a target available path with better transmission performance from a plurality of available paths.

The terminal may enable a "link establishment path selection" function, so as to select the target available path with better transmission performance from the plurality of available paths. The terminal may select the target available path in any manner described in the foregoing embodiments. Step 1105 may be understood as performing link establishment path selection.

1105: The terminal obtains a default path.

The default path may be understood as a path preconfigured by the terminal.

1106: The terminal establishes a transport layer connection by using the target available path or the default path.

Optionally, an information obtaining unit 201 in the terminal collects link establishment success information and link establishment failure information, to provide reference data for a path selection unit 202 to select the path with better transmission performance from the plurality of available paths.

In this embodiment of this application, when the terminal establishes a transport layer connection for the target application for the first time, an amount of obtained transmission status information may be comparatively small, and establishing the transport layer connection by using the default path can avoid a case in which an available path with poorer transmission performance is selected.

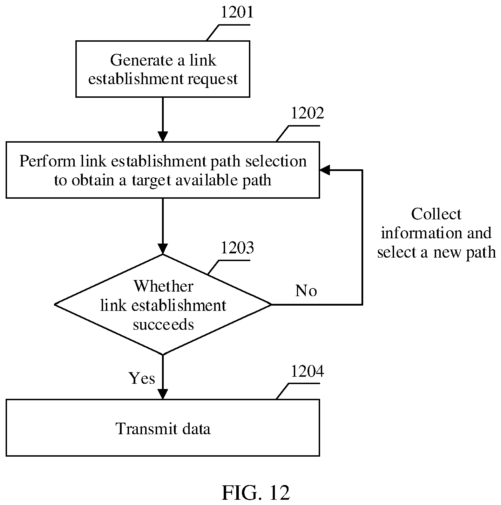

The terminal may select a path each time the terminal establishes a link. If a link fails to be established by using a selected available path, the terminal collects information, selects a new available path, and establishes a link by using the new available path. FIG. 12 is a flowchart of another path selection method according to an embodiment of this application. As shown in FIG. 12, the method may include the following steps.

1201: A terminal generates a target link establishment request based on an application request.

1202: The terminal performs link establishment path selection.

The terminal may select a target available path with better transmission performance from a plurality of available paths in any one of the foregoing path selection manners.

1203: Determine whether a transport layer connection is successfully established by using the target available path.

If yes, step 1204 is performed. Otherwise, an information obtaining unit 201 in the terminal collects link establishment failure information, so that a path selection unit 201 selects a new available path different from the target available path.

1204: Transmit data through a newly established transport layer connection.

In this embodiment of this application, when link establishment fails, the terminal collects link establishment failure information, and further selects a new available path. This can greatly increase a link establishment success rate.

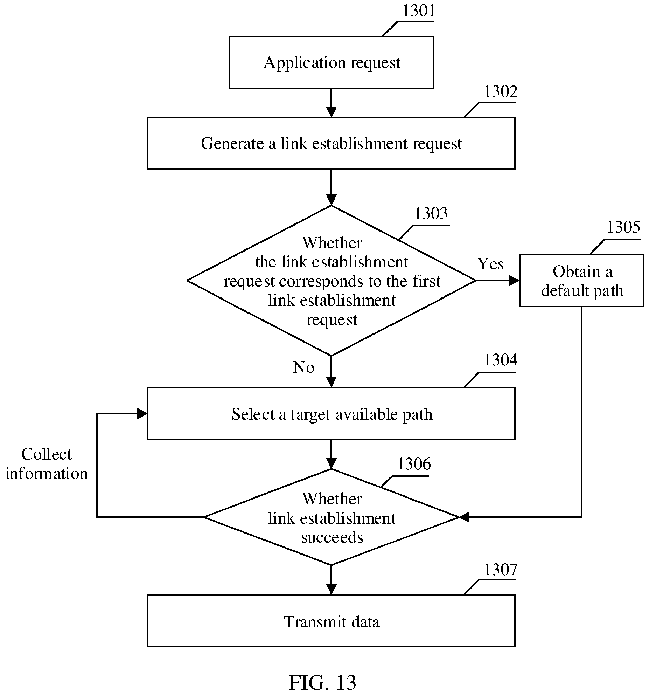

When establishing a transport layer connection for a target application for the first time, the terminal may establish the transport layer connection based on a default path. If a link fails to be established by using the default path, the terminal collects information, selects a new available path, and establishes a link on the newly selected available path. FIG. 13 is a flowchart of another path selection method according to an embodiment of this application. As shown in FIG. 13, the method may include the following steps.

1301: A terminal obtains an application request of a target application.

1302: The terminal generates a target link establishment request based on the application request.

1303: The terminal determines whether the target link establishment request is the first link establishment request corresponding to the target application.

If yes, step 1305 is performed. Otherwise, step 1304 is performed.

1304: The terminal performs link establishment path selection to obtain a target available path.

1305: The terminal obtains a default path.

1306: Determine whether a transport layer connection is successfully established by using the target available path.

If yes, step 1307 is performed. Otherwise, an information obtaining unit 201 in the terminal collects link establishment failure information, so that a path selection unit 201 selects a new available path different from the target available path. In other words, after the terminal fails to establish the transport layer connection by using the target available path, the terminal establishes a transport layer connection by using an available path other than the target available path in M available paths. It may be understood that, after a link fails to be established by using an available path that is currently selected by the terminal, a new available path is selected from the available paths except the available path, to establish a transport layer connection.

1307: Transmit data through a newly established transport layer connection.

In this embodiment of this application, when link establishment fails, the terminal collects link establishment failure information, and further selects a new available path. This can greatly increase a link establishment success rate.

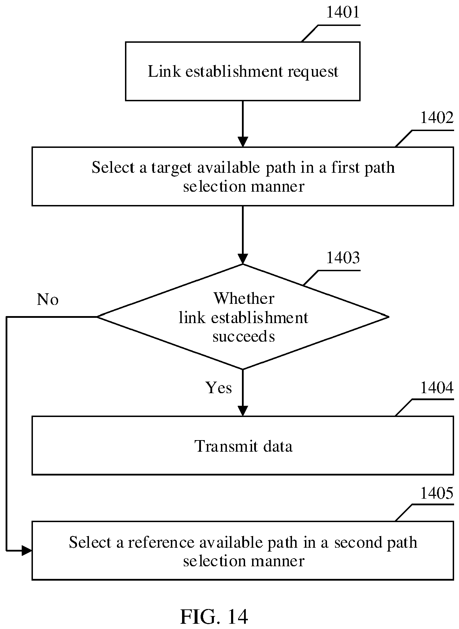

In actual application, the terminal may select a target available path with better transmission performance from a plurality of available paths with reference to a plurality of path selection manners. FIG. 14 is a flowchart of another path selection method according to an embodiment of this application. As shown in FIG. 14, the method may include the following steps.

1401: A terminal generates a link establishment request based on an application request.

1402: The terminal selects a path with better transmission performance from a plurality of available paths in a first path selection manner, to obtain a target available path.

The first path selection manner may be any one of the foregoing path selection manners. For example, in the first path selection manner, the available path with better transmission performance may be selected based on a throughput of each available path.

1403: Determine whether a link is successfully established by using the target available path.

If yes, step 1404 is performed. Otherwise, step 1405 is performed.

1404: Transmit data through a newly established transport layer connection.

1405: The terminal selects a path with better transmission performance from the plurality of available paths in a second path selection manner, to obtain a reference available path.

Any path selection manner other than the first path selection manner in the plurality of path selection manners mentioned above may be used as the second path selection manner. For example, the terminal first selects an available path from the plurality of available paths in the foregoing manner 1, and if the terminal fails to establish a link by using the available path, the terminal selects a new available path in the foregoing manner 3. It should be understood that FIG. 14 is merely an example. All manners of selecting an available path from a plurality of available paths by using a combination of a plurality of path selection manners are solutions for which this application claims protection. Because a quantity of combination manners is excessively large, examples are not listed one by one herein.

In the embodiments of this application, a path selection manner of a terminal, that is, a rule for selecting an available path with better transmission performance by using a "link establishment path selection" function of the terminal, may be preconfigured by the terminal, may be set and adjusted by a user based on a requirement, or may be adjusted by a professional through an external interface provided by the terminal. The terminal may provide a plurality of path selection manners for the user, and the user may select a path selection manner based on a requirement, and may adjust settings at any time. For example, when watching a video by using the terminal, the user may set the terminal to select a path in the manner 2 described above; when playing an online game, the user may set the terminal to select a path in the manner 3 described above. The terminal may provide an external interface used for path selection manner update, and a professional may constantly optimize a path selection manner of the terminal through the external interface.

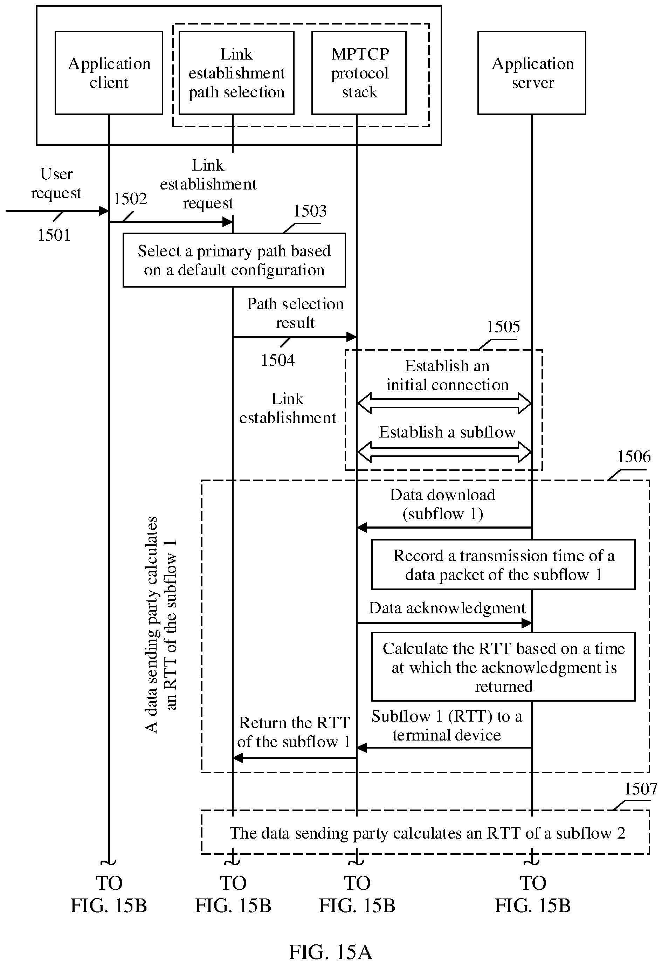

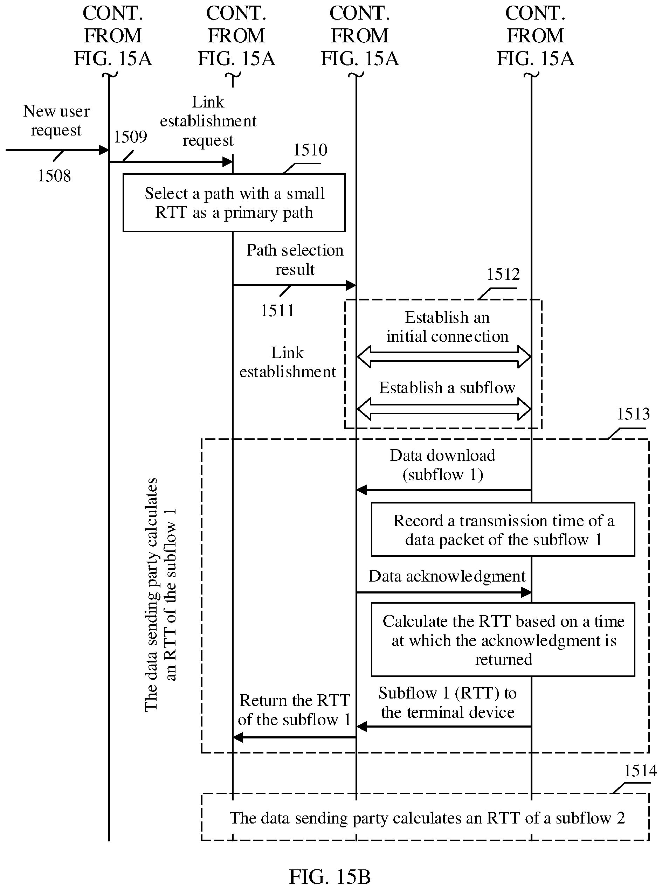

A complete process of path selection, link establishment, and data transmission is not described in detail in the foregoing embodiments. The following uses MPTCP as an example to describe a method procedure of data transmission between an application client (a terminal) and an application server. FIG. 15A and FIG. 15B are a schematic flowchart of a data transmission method according to an embodiment of this application. The method may include the following steps.

1501: An application client receives a user request.

The user request corresponds to the foregoing application request, and is used to request to establish at least one transport layer connection. The application client is a terminal. For example, starting a video application on the terminal by a user may be understood as receiving a user request by the terminal.

1502: The application client sends a link establishment request to a path selection module.

A protocol used by the terminal to implement a "link establishment path selection" function may be integrated with an MPTCP protocol stack, or may not be integrated with an MPTCP protocol stack.

1503: The path selection module selects a primary path based on a default configuration.

The terminal uses a default path as the primary path. Step 1503 may be replaced by the following: The path selection module selects a primary path in a configured path selection manner (link establishment rule).

1504: The path selection module returns a path selection result to the MPTCP protocol stack.

1505: The MPTCP protocol stack completes establishment of an MPTCP connection, including establishment of the primary path and a subpath, between the application client and an application server.

1506: A data sending party (the application server) calculates an RTT of a subflow 1.

Calculating the RTT of the subflow 1 by the data sending party includes the following procedure: (1) The application server sends data to the application client by using the subflow 1. (2) The application server records a transmission timestamp of a data packet of the subflow 1. (3) The application client returns a data acknowledgment (an ACK message). (4) The application server calculates the RTT of the subflow 1 based on a time at which the data acknowledgment is returned: RTT = Timestamp of returning the data acknowledgment by the client - Transmission timestamp of the data packet of the subflow 1. (5) The application server returns the RTT of the subflow 1 to the application client. Transmission of the RTT may be carried at a transport layer by adding TCP Option (a newly added parameter in a TCP protocol).

1507: The data sending party (application server) calculates an RTT of a subflow 2.

A manner in which the application server calculates the RTT of the subflow 2 is the same as a manner of calculating the RTT of the subflow 1.

1508: The application client receives a new user request.

1509: The application client sends a link establishment request to the path selection module.

1510: The path selection module selects a path with a small RTT as a primary path.

The path selection module may select a path as the primary path in any one of the foregoing path selection manners.

1511: The path selection module returns a path selection result to the MPTCP protocol stack.

1512: The MPTCP protocol stack completes establishment of a link between the application client and the application server.

1513: The data sending party calculates an RTT of the subflow 1.

1514: The data sending party calculates an RTT of the subflow 2.

A method for "calculating an RTT by the data sending party" shown in step 1506, step 1507, step 1513, and step 1514 may alternatively be as follows: (1) The data sending party sends data to the data receiving party, where the data includes a sending timestamp (timestamp). (2) The data receiving party returns an acknowledgment message (ACK message), and returns the received timestamp (timestamp) to the data sending party at the same time. (3) The data sending party compares, with the timestamp in the acknowledgment message, a time at which the acknowledgment message is received, and calculates the RTT. This can prevent the data sending party from storing a data sending timestamp.

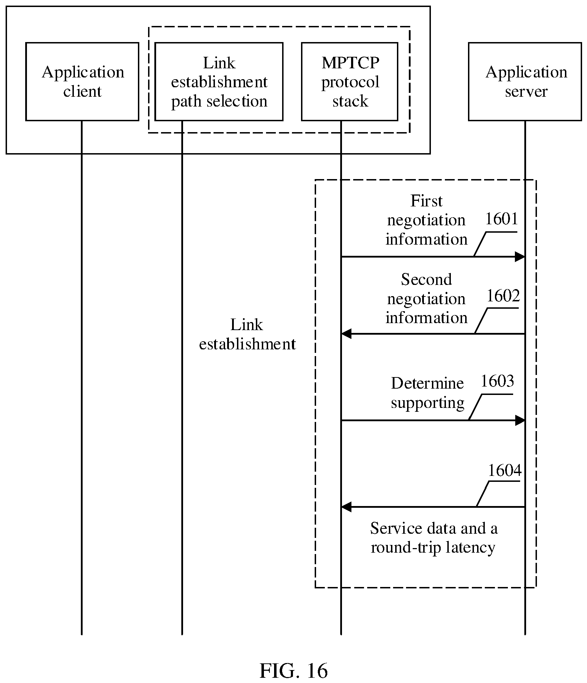

In some embodiments, during MPTCP connection establishment (that is, during link establishment), an application client and an application server may perform a capability negotiation procedure to determine whether the application client and the application server each have a capability of supporting the application server in sending a round-trip time of a subflow. FIG. 16 shows an example of a capability negotiation procedure performed by an application client and an application server. As shown in FIG. 16, the capability negotiation procedure is as follows.

1601: The application client sends first negotiation information to the application server, where the first negotiation information is used to indicate that the application client has a capability of supporting the application server in sending a round-trip time of a subflow.

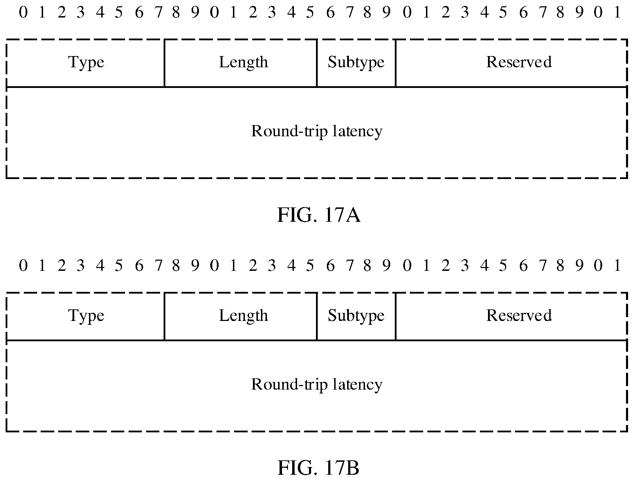

The first negotiation information may be an MPTCP message. Negotiation information sent by the application client to the application server may be used to indicate that the application client has the capability of supporting the application server in sending a round-trip time of a subflow, that is, has a capability of supporting "sending a round-trip time of a subflow by the server", or may be used to indicate that the application client has a capability of supporting the application server in receiving a round-trip time of a subflow, that is, has a capability of supporting "receiving a round-trip time of a subflow by the server". It may be understood that, if the negotiation information sent by the application client to the application server is used to indicate that the application client has the capability of supporting the application server in sending a round-trip time of a subflow, the application server transmits a round-trip time of a subflow to the application client after negotiation; if the negotiation information sent by the application client to the application server is used to indicate that the application client has the capability of supporting the application server in receiving a round-trip time of a subflow, the application client transmits a round-trip time of a subflow to the application server after negotiation. In this embodiment of this application, the capability negotiation procedure is described by using an example in which the negotiation information is used to indicate that a sending party has the capability of supporting the application server in sending a round-trip time of a subflow. Optionally, when the application client has a capability of obtaining, by parsing a packet sent by the application server, a subflow round-trip time carried in the packet, the application client sends the first negotiation information to the application server. For example, FIG. 17A is a schematic diagram of an option field of first negotiation information according to an embodiment of this application. As shown in FIG. 17A, the option field of the first negotiation information includes a kind field, a length field, a subtype field, a reserved field, and a round-trip time field. For example, a value corresponding to the kind field is 30, and the round-trip time field does not include round-trip time data.

1602: The application server sends second negotiation information to the application client, where the second negotiation information is used to indicate that the application server has a capability of supporting sending a round-trip time of a subflow.

The second negotiation information may be an MPTCP message. Optionally, when the application server has a capability of calculating a round-trip time of a subflow and adding the round-trip time to a packet that is to be sent to the application client, the application server sends the second negotiation information to the application client. For example, FIG. 17B is a schematic diagram of an option field of second negotiation information according to an embodiment of this application. As shown in FIG. 17B, the option field of the second negotiation information includes a kind field, a length field, a subtype field, a reserved field, and a round-trip time field. For example, a value corresponding to the kind field is 30, and the round-trip time field does not include round-trip time data.

1603: The application client determines that the application server has the capability of supporting sending a round-trip time of a subflow, and indicates the application server to send a round-trip time of a subflow and service data to the application client.

1604: The application client receives the service data and the round-trip time of the subflow that are from the application server.

The subflow is a subflow for transmitting the service data. That is, a round-trip time field of a packet sent by the application server indicates the round-trip time of the subflow, and a data portion of the packet is the service data.

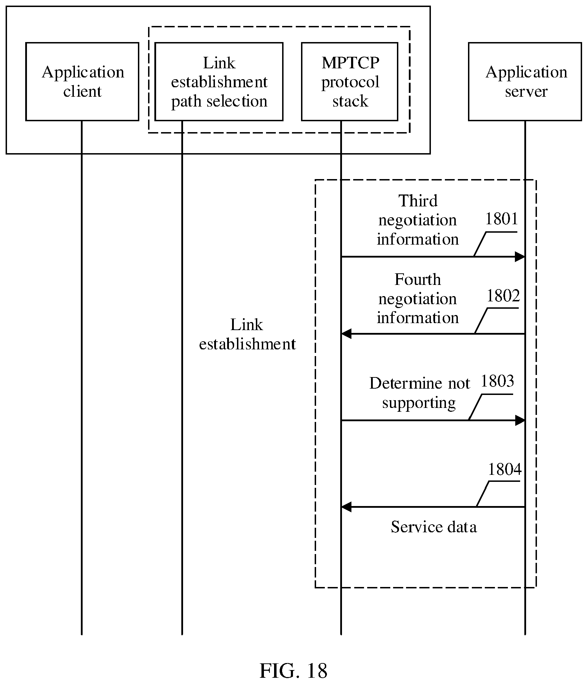

FIG. 18 shows an example of another capability negotiation procedure performed by an application client and an application server. As shown in FIG. 18, the capability negotiation procedure is as follows.

1801: The application client sends third negotiation information to the application server, where the third negotiation information is used to indicate that the application client has a capability of supporting the application server in sending a round-trip time of a subflow.

The third negotiation information may be an MPTCP message. Optionally, when the application client has a capability of obtaining, by parsing a packet sent by the application server, a subflow round-trip time carried in the packet, the application client sends the third negotiation information to the application server. The third negotiation information is similar to the foregoing first negotiation information, and details are not described herein again.

1802: The application server sends fourth negotiation information to the application client, where the fourth negotiation information is used to indicate that the application client has no capability of supporting the application server in sending a round-trip time of a subflow.

The second negotiation information may be an MPTCP message. Optionally, when the application server has no capability of calculating a round-trip time of a subflow or has no capability of adding the round-trip time to a packet that is to be sent to the application client, the application server sends the fourth negotiation information to the application client. For example, an option field of the fourth negotiation information does not include a subtype field indicating that the application server has a capability of supporting the application server in sending a round-trip time of a subflow.

1803: The application client determines that the application server has no capability of supporting the application server in sending a round-trip time of a subflow, and indicates the application server to send service data to the application client.

1804: The application client receives the service data from the application server.

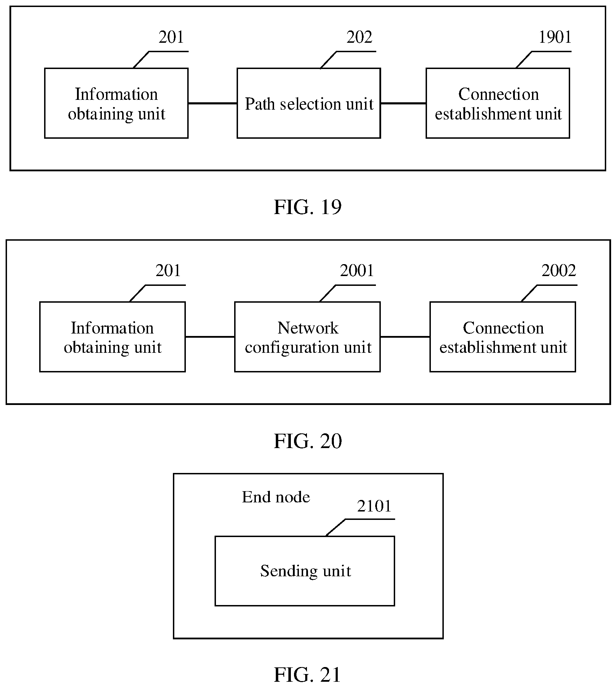

FIG. 19 is a schematic structural diagram of an end node according to an embodiment of this application. As shown in FIG. 19, the end node includes:

an information obtaining unit 201, configured to obtain respective transmission status information of at least two available paths, where transmission status information of each of the at least two available paths indicates transmission performance of the available path, and the at least two available paths respectively correspond to different types of networks;
a path selection unit 202, configured to determine an available path with better transmission performance in the at least two available paths based on the transmission status information of the at least two available paths; and
a connection establishment unit 1901, configured to establish the connection by using a network corresponding to the available path with better transmission performance.

In an optional implementation, the end node further includes a receiving unit, configured to receive a path setting instruction; and

a path setting unit, configured to set, according to the path setting instruction, a manner in which the end node determines the available path with better transmission performance in the at least two available paths based on the transmission status information of the at least two available paths.

The end node in FIG. 19 may implement any data transmission method and path selection method in the foregoing embodiments.

FIG. 20 is a schematic structural diagram of an end node according to an embodiment of this application. As shown in FIG. 20, the end node includes:

an information obtaining unit 201, configured to obtain transmission status information respectively corresponding to at least two network interfaces on the end node, where transmission status information of each of the at least two network interfaces indicates transmission performance of a network corresponding to the network interface, and the at least two network interfaces respectively correspond to different types of networks;

a network configuration unit 2001, configured to configure, for an initial path of the multipath connection based on the transmission status information respectively corresponding to the at least two network interfaces, a network with better transmission performance in the networks respectively corresponding to the at least two network interfaces, where the initial path corresponds to an initial subflow of the multipath connection; and

a connection establishment unit 2002, configured to establish the initial path by using the network with better transmission performance.

The end node in FIG. 20 may implement any data transmission method and path selection method in the foregoing embodiments.

FIG. 21 shows another end node according to an embodiment of this application. As shown in FIG. 21, the end node includes:

a sending unit 2101, configured to send, to another end node of the connection, a round-trip time of a path of the connection, where the round-trip time is used to indicate transmission performance of the another end node in a network corresponding to the path. Optionally, the round-trip time is carried in an option field in a header of a packet. Optionally, the end node in FIG. 21 is a server.

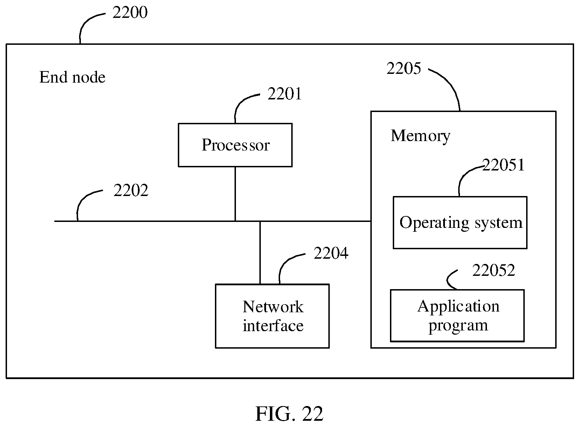

FIG. 22 is a schematic structural diagram of a terminal according to an embodiment of this application. The terminal 2200 includes at least one processing circuit 2201, a communications interface 2204, a storage medium 2205, and at least one communications bus 2202, where the communications interface 2204 includes at least one physical network interface card. The communications bus 2202 is configured to implement connections and communication between these components. The storage medium 2205 stores code used to perform any method described in this application. The communications interface 2204 may include various types of hardware used for communication, and an interface that is in the hardware and that is used on an end node (a terminal or a server) to access a network is a network interface.

In some implementations, the storage medium 2205 stores the following elements, executable module, or data structure, or a subset thereof, or an extended set thereof: an operating system 22051, including various system programs, such as a framework layer, a kernel library layer, and a driver layer, and configured to implement various basic services and process a hardware-based task; and an application program module 22052, including various application programs, such as a desktop (launcher), a media player (Media Player), and a browser (Browser), and configured to implement various application services. If the device is a gateway, the storage medium 2205 may store only program code required for performing the foregoing method.

Another embodiment of this application further describes a chip or a storage medium. The chip or the storage medium may be placed in the foregoing end node, and is configured to perform the method described in this application, or store code used to perform the method described in this application.

In the several embodiments provided in this application, it should be understood that the disclosed apparatus and method may be implemented in other manners. For example, the described apparatus embodiment is merely an example. For example, the division into the modules or units is merely logical function division, and may be other division in actual implementation. For example, a plurality of units or components may be combined, or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, and may be located in one place, or may be distributed in different places. Some or all of the units may be selected based on an actual requirement to achieve the objectives of the solutions of the embodiments.

In addition, functional units in the embodiments of this application may be integrated into one processing unit, or each unit may exist alone physically, or two or more units may be integrated into one unit. The integrated unit may be implemented in a form of hardware, or may be implemented in a form of a software function unit.

All or some of the foregoing methods in the embodiments of this application may be implemented by using software, hardware, firmware, or any combination thereof. When software is used for implementation, the embodiments may be implemented completely or partially in a form of a computer program product. The computer program product includes one or more computer instructions. When the computer program instruction is loaded and executed on a computer, the procedures or functions according to the embodiments of this application are all or partially generated. The computer may be a general-purpose computer, a dedicated computer, a computer network, a network device, a terminal, or another programmable apparatus. The computer instruction may be stored in a computer-readable storage medium, or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A connection establishment method, wherein the method is used for an end node of the connection, and the method comprises:

    obtaining respective transmission status information of at least two available paths, wherein transmission status information of each of the at least two available paths indicates transmission performance of the available path, and the at least two available paths respectively correspond to different types of networks;
    determining an available path with better transmission performance from the at least two available paths based on the transmission status information of the at least two available paths; and
    establishing the connection by using a network corresponding to the available path with better transmission performance.

2. The method according to claim 1, wherein the transmission status information of each of the at least two available paths comprises at least one of the following parameters: signal strength, a throughput, a round-trip time, and a link establishment success rate.

3. The method according to claim 1 or 2, wherein the connection is a multipath connection, and the establishing the connection by using a network corresponding to the available path with better transmission performance comprises: communicating with another end node of the connection by using the network corresponding to the available path with better transmission performance, to establish an initial path of the multipath connection.

4. The method according to claims 1 to 3, wherein the obtaining respective transmission status information of at least two available paths is triggered by a request delivered by an application in the end node.

5. The method according to any one of claims 1 to 4, wherein the transmission status information of the at least two available paths is signal strength of each of the at least two available paths, and the obtaining transmission status information of at least two available paths comprises:
    detecting respective signal strength of the at least two available paths.

6. The method according to any one of claims 1 to 4, wherein the transmission status information of the at least two available paths is a round-trip time of each of the at least two available paths, and the obtaining transmission status information of at least two available paths comprises:

    receiving a plurality of round-trip time from at least one server, where each of the plurality of round-trip time corresponds to a path that has connected the at least one server to the end node or a path that is connecting the at least one server to the end node, and network types corresponding to the plurality of round-trip time comprise the types of the networks respectively corresponding to the at least two available paths; and obtaining round-trip time of the at least two available paths based on the plurality of round-trip time.

7.  The method according to any one of claims 1 to 4, wherein a round-trip time of any one of the at least two available paths is carried in an option field in a header of a packet sent by the another end node.

8.  The method according to any one of claims 1 to 4, wherein the transmission status information of the at least two available paths is a throughput of each of the at least two available paths, and the obtaining transmission status information of at least two available paths comprises:
detecting respective throughputs of the at least two available paths.

9.  The method according to any one of claims 1 to 4, wherein the transmission status information of the at least two available paths is a link establishment success rate of each of the at least two available paths, and the obtaining transmission status information of at least two available paths comprises:
collecting statistics about the link establishment success rate of each of the at least two available paths.

10. The method according to claim 4, wherein before the obtaining respective transmission status information of at least two available paths, the method further comprises:
determining, based on the request delivered by the application, that the application once established a connection on the end node.

11. The method according to claim 10, wherein the method further comprises:

receiving a request delivered by another application, wherein the request delivered by the another application triggers a process of establishing another connection by the end node; and
if the application has never established a connection on the end node, establishing, based on the request delivered by the another application, the connection by using a network corresponding to a default path, wherein the default path is any one of the at least two available paths.

12. The method according to any one of claims 1 to 11, wherein the determining an available path with better transmission performance in the at least two available paths based on the transmission status information of the at least two available paths comprises:
if the connection fails to be established by using a network corresponding to a reference available path, determining the available path with better transmission performance in the at least two available paths based on transmission status information of an available path other than the reference available path in the at least two available paths, wherein the reference available path is any one of the at least two available paths.

13. The method according to any one of claims 1 to 11, wherein the determining an available path with better transmission performance in the at least two available paths based on the transmission status information of the at least two available paths comprises:
if the connection fails to be established by using a network corresponding to a reference available path, determining the available path with better transmission performance in the at least two available paths based on the transmission status information of the at least two available paths in a first path selection manner, wherein the reference available path is an available path with better transmission performance in the at least two available paths that is determined based on the transmission status information of the at least two available paths in a second path selection manner, and the first path selection manner is different from the second path selection manner.

14. The method according to any one of claims 1 to 13, wherein the method further comprises:

receiving a path setting instruction; and
setting, according to the path setting instruction, a manner in which the end node determines the available path with better transmission performance in the at least two available paths based on the transmission status information of the at least two available paths.

15. A method for establishing a multipath connection, wherein the method is used for an end node of the multipath connection, and the method comprises:

obtaining transmission status information respectively corresponding to at least two network interfaces on the end node, wherein transmission status information of each of the at least two network interfaces indicates transmission performance of a network corresponding to the network interface, and the at least two network interfaces respectively correspond to different types of networks;

configuring, for an initial path of the multipath connection based on the transmission status information respectively corresponding to the at least two network interfaces, a network with better transmission performance in the networks respectively corresponding to the at least two network interfaces, wherein the initial path corresponds to an initial subflow of the multipath connection; and

establishing the initial path by using the network with better transmission performance.

16. The method according to claim 15, wherein the transmission status information of each of the at least two network interfaces is represented by using at least one of the following parameters: signal strength, a throughput, a round-trip time, and a link establishment success rate.

17. The method according to claim 15 or 16, wherein the obtaining transmission status information respectively corresponding to at least two network interfaces in the end node is triggered by a request delivered by an application in the end node.

18. The method according to any one of claims 15 to 17, wherein the transmission status information respectively corresponding to the at least two network interfaces is round-trip time respectively corresponding to the at least two network interfaces, and the obtaining transmission status information respectively corresponding to at least two network interfaces on the end node comprises:

receiving round-trip time of a plurality of paths from at least one server, wherein one end of the plurality of paths is the end node, and types of networks corresponding to the plurality of paths comprise types of networks respectively corresponding to the at least two available paths; and

obtaining round-trip time of the at least two available paths based on the plurality of round-trip time.

19. The method according to claim 17, wherein the application once established a connection on the end node.

20. A communication method, wherein the method is used for an end node of a connection, and the method comprises: sending, by the end node to another end node of the connection, a round-trip time of a path of the connection, wherein the round-trip time is used to indicate transmission performance of the another end node in a network corresponding to the path.

21. The method according to claim 20, wherein the round-trip time is carried in an option field in a header of a packet.

22. An end node, comprising:

an information obtaining unit, configured to obtain respective transmission status information of at least two available paths, wherein transmission status information of each of the at least two available paths indicates transmission performance of the available path, and the at least two available paths respectively correspond to different types of networks;

a path selection unit, configured to determine an available path with better transmission performance in the at least two available paths based on the transmission status information of the at least two available paths; and

a connection establishment unit, configured to establish the connection by using a network corresponding to the available path with better transmission performance.

23. The end node according to claim 22, wherein the transmission status information of each of the at least two available paths comprises at least one of the following parameters: signal strength, a throughput, a round-trip time, and a link establishment success rate.

24. The end node according to claim 22, wherein the connection is a multipath connection; and the connection establishment unit is specifically configured to communicate with another end node of the connection by using the network corresponding to the available path with better transmission performance, to establish an initial path of the multipath connection.

25. The end node according to any one of claims 22 to 24, wherein the transmission status information of the at least two available paths is signal strength of each of the at least two available paths; and
the information obtaining unit is specifically configured to detect respective signal strength of the at least two available paths.

26. The end node according to any one of claims 22 to 24, wherein the transmission status information of the at least two available paths is a round-trip time of each of the at least two available paths; and

the information obtaining unit is specifically configured to: receive a plurality of round-trip time from at least one server, wherein each of the plurality of round-trip time corresponds to a path that has connected the at least one server to the end node or a path that is connecting the at least one server to the end node, and network types corresponding to the plurality of round-trip time comprise the types of the networks respectively corresponding to the at least two available paths; and
obtain round-trip time of the at least two available paths based on the plurality of round-trip time.

27. The end node according to any one of claims 22 to 24, wherein the transmission status information of the at least two available paths is a throughput of each of the at least two available paths; and
the information obtaining unit is specifically configured to detect respective throughputs of the at least two available paths.

28. An end node, wherein the end node is an end node of the multipath connection and comprises:

an information obtaining unit, configured to obtain transmission status information respectively corresponding to at least two network interfaces on the end node, wherein transmission status information of each of the at least two network interfaces indicates transmission performance of a network corresponding to the network interface, and the at least two network interfaces respectively correspond to different types of networks;
a network configuration unit, configured to configure, for an initial path of the multipath connection based on the transmission status information respectively corresponding to the at least two network interfaces, a network with better transmission performance in the networks respectively corresponding to the at least two network interfaces, where the initial path corresponds to an initial subflow of the multipath connection; and
a connection establishment unit, configured to establish the initial path by using the network with better transmission performance.

29. The end node according to claim 28, wherein the transmission status information of each of the at least two network interfaces is represented by using at least one of the following parameters: signal strength, a throughput, a round-trip time, and a link establishment success rate.

30. The end node according to claim 28 or 29, wherein the transmission status information respectively corresponding to the at least two network interfaces is round-trip time respectively corresponding to the at least two network interfaces; and
the information obtaining unit is specifically configured to: receive round-trip time of a plurality of paths from at least one server, wherein one end of the plurality of paths is the end node, and types of networks corresponding to the plurality of paths comprise types of networks respectively corresponding to the at least two available paths; and
obtain round-trip time of the at least two available paths based on the plurality of round-trip time.

31. The end node according to claim 28 or 29, wherein the obtaining transmission status information respectively corresponding to at least two network interfaces on the end node is triggered by a request delivered by an application in the end node, and the application once established a connection on the end node.

32. An end node, wherein the end node is an end node of a connection and comprises:
a sending unit, configured to send, to another end node of the connection, a round-trip time of a path of the connection, wherein the round-trip time is used to indicate transmission performance of the another end node in a network corresponding to the path.

33. The end node according to claim 32, wherein the round-trip time is carried in an option field in a header of a packet.

34. A computer-readable storage medium, wherein the computer storage medium stores a computer program, the computer program comprises program instructions, and when the program instructions are executed by a processor, the processor is enabled to perform the method according to any one of claims 1 to 21.

101

102

| Application 1 | Application 2 |

| Application 3 | ... | Application N |

Link establishment path selection

Transmission status information

Transport layer protocol stack

Network

| Application 1 | Application 2 |

| Application 3 | ... | Application N |

Transport layer protocol stack

FIG. 1

20

201

Information obtaining unit

202

Path selection unit

FIG. 2

FIG. 3

Application n

...

Application 2

MPTCP connection 2

MPTCP connection 1

Application 1

MPTCP connection 3

MPTCP connection 2

MPTCP connection 1

LTE

Wi-Fi

FIG. 4

201

| Traffic monitoring subunit | Candidate-path management subunit | Clock control subunit |
|---|---|---|

501       502       503

FIG. 5

601

Generate a link establishment request

602

Obtain throughputs of M available paths

603

Select a target available path

604

Establish an MPTCP connection by using the target available path as a primary path

FIG. 6

701

Link establishment request

702

Obtain a throughput of LTE and a throughput of Wi-Fi

703

The throughput of Wi-Fi is lower than the throughput of LTE

No

Yes

704

Establish an MPTCP connection by using LTE as a primary path

705

Establish an MPTCP connection by using Wi-Fi as a primary path

FIG. 7

Terminal          Server

Establish a transport layer connection

Data transmission

ACK

Data transmission

ACK

FIG. 8

901

Obtain round-trip latencies of M available paths

902

Select a target available path

903

Establish an MPTCP connection by using the target available path as a primary path

FIG. 9

1001

Obtain a round-trip latency of LTE and a round-trip latency of Wi-Fi

1002

No ← The round-trip latency of Wi-Fi is lower than the round-trip latency of LTE

Yes

1003

Establish an MPTCP connection by using Wi-Fi as a primary path

1004

Establish an MPTCP connection by using LTE as a primary path

FIG. 10

1101
Application request

1102
Generate a link establishment request

1103
Whether the link establishment request corresponds to the first link establishment request

Yes

1105
Obtain a default path

No

1104
Select a target available path

Collect information

1106
Establish a transport layer connection

FIG. 11

1201

Generate a link
establishment request

1202

Perform link establishment path selection
to obtain a target available path

Collect
information and
select a new path

1203

Whether
link establishment
succeeds

No

Yes

1204

Transmit data

FIG. 12

1301

Application request

1302

Generate a link establishment request

1303

Whether the link establishment request corresponds to the first link establishment request

Yes → 1305

Obtain a default path

No

1304

Select a target available path

Collect information

1306

Whether link establishment succeeds

1307

Transmit data

FIG. 13

1401

Link establishment request

1402

Select a target available path in a first path selection manner

1403

Whether link establishment succeeds

No

Yes

1404

Transmit data

1405

Select a reference available path in a second path selection manner

FIG. 14

FIG. 15A

CONT. FROM FIG. 15A    CONT. FROM FIG. 15A    CONT. FROM FIG. 15A    CONT. FROM FIG. 15A

New user request

Link establishment request

1509

1508

1510

Select a path with a small RTT as a primary path

Path selection result

1512

1511

Establish an initial connection

Link establishment

Establish a subflow

1513

Data download (subflow 1)

Record a transmission time of a data packet of the subflow 1

Data acknowledgment

Calculate the RTT based on a time at which the acknowledgment is returned

The data sending party calculates an RTT of the subflow 1

Return the RTT of the subflow 1

Subflow 1 (RTT) to the terminal device

1514

The data sending party calculates an RTT of a subflow 2

FIG. 15B

FIG. 16

0 1 2 3 4 5 6 7 8 9 0 1 2 3 4 5 6 7 8 9 0 1 2 3 4 5 6 7 8 9 0 1

| Type | Length | Subtype | Reserved |
|------|--------|---------|----------|
| Round-trip latency | | | |

FIG. 17A

0 1 2 3 4 5 6 7 8 9 0 1 2 3 4 5 6 7 8 9 0 1 2 3 4 5 6 7 8 9 0 1

| Type | Length | Subtype | Reserved |
|------|--------|---------|----------|
| Round-trip latency | | | |

FIG. 17B

FIG. 18

201　　　　　　　　202　　　　　　　　1901

| Information obtaining unit | Path selection unit | Connection establishment unit |

**FIG. 19**

201　　　　　　　　2001　　　　　　　　2002

| Information obtaining unit | Network configuration unit | Connection establishment unit |

**FIG. 20**

End node　　　2101

| Sending unit |

**FIG. 21**

2200

End node

2201

Processor

2205

Memory

2202

22051

Operating system

2204

22052

Network
interface

Application
program

FIG. 22

## INTERNATIONAL SEARCH REPORT

| International application No. |
| --- |
| **PCT/CN2019/128100** |

**A. CLASSIFICATION OF SUBJECT MATTER**

H04L 29/06(2006.01)i

According to International Patent Classification (IPC) or to both national classification and IPC

**B. FIELDS SEARCHED**

Minimum documentation searched (classification system followed by classification symbols)

H04Q; H04W; H04M; H04L

Documentation searched other than minimum documentation to the extent that such documents are included in the fields searched

Electronic data base consulted during the international search (name of data base and, where practicable, search terms used)

DWPI; EPTXT; CNTXT; USTXT; WOTXT; VEN; CNKI; 3GPP: 传输层, 多, 通道, 路径, 协议, 通信, 网络, 选择, 优化, 时延, 距离, 信道, 属性, 接口, mptcp, multi, path, protocol, network, communication+, tele+. select+, optimiz+, delay+, time, distance, channel, charact+, interface

**C. DOCUMENTS CONSIDERED TO BE RELEVANT**

| Category* | Citation of document, with indication, where appropriate, of the relevant passages | Relevant to claim No. |
| --- | --- | --- |
| X | CN 107979588 A (SAMSUNG ELECTRONICS CO., LTD.) 01 May 2018 (2018-05-01) claims 1-3, and description, paragraphs [0096]-[0118] | 1-34 |
| A | CN 107222889 A (SAMSUNG ELECTRONICS CO., LTD.) 29 September 2017 (2017-09-29) entire document | 1-34 |
| A | CN 101404622 A (CHONGQING UNIVERSITY OF POSTS AND TELECOMMUNICATIONS) 08 April 2009 (2009-04-08) entire document | 1-34 |
| A | US 2017127325 A1 (TELEFONAKTIEBOLAGET L M ERICSSON (PUBL)) 04 May 2017 (2017-05-04) entire document | 1-34 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 February 2020** | **13 March 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/128100**

| Patent document cited in search report | | | Publication date (day/month/year) | Patent family member(s) | | | Publication date (day/month/year) |
|---|---|---|---|---|---|---|---|
| CN | 107979588 | A | 01 May 2018 | KR | 20180045181 | A | 04 May 2018 |
| | | | | EP | 3316623 | A1 | 02 May 2018 |
| | | | | US | 2018115438 | A1 | 26 April 2018 |
| | | | | US | 10516552 | B2 | 24 December 2019 |
| CN | 107222889 | A | 29 September 2017 | US | 2017272995 | A1 | 21 September 2017 |
| | | | | KR | 20170109466 | A | 29 September 2017 |
| CN | 101404622 | A | 08 April 2009 | CN | 101404622 | B | 23 March 2011 |
| US | 2017127325 | A1 | 04 May 2017 | EP | 3372010 | A1 | 12 September 2018 |
| | | | | WO | 2017077366 | A1 | 11 May 2017 |

Form PCT/ISA/210 (patent family annex) (January 2015)